(19)

Europäisches
Patentamt
European
Patent Office
Office européen
des brevets

(11) **EP 2 696 222 A2**

(12) **EUROPEAN PATENT APPLICATION**

(43) Date of publication:
**12.02.2014 Bulletin 2014/07**

(51) Int Cl.:
***G02B 5/02*** *(2006.01)*      ***G02B 5/30*** *(2006.01)*
***G02B 1/11*** *(2006.01)*

(21) Application number: **13174276.9**

(22) Date of filing: **28.06.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.06.2012 JP 2012146168
27.12.2012 JP 2012286383**

(71) Applicant: **Nitto Denko Corporation
Ibaraki-shi, Osaka 567-8680 (JP)**

(72) Inventors:
• **Kishi, Atsushi
Osaka, 567-8680 (JP)**
• **Ninomiya, Masaki
Osaka, 567-8680 (JP)**
• **Hashimoto, Naoki
Osaka, 567-8680 (JP)**
• **Kuramoto, Hiroki
Osaka, 567-8680 (JP)**
• **Takemoto, Hiroyuki
Osaka, 567-8680 (JP)**

(74) Representative: **HOFFMANN EITLE
Patent- und Rechtsanwälte
Arabellastrasse 4
81925 München (DE)**

(54) **Method for producing anti-glare film, anti-glare film, coating solution, polarizing plate, and image display**

(57)      A method for producing an anti-glare film, capable of controlling a flocculation state of particles without depending on flocculation characteristics of the particles and thus capable of forming an anti-glare layer having desired surface asperities. In the method, a coating solution containing a resin, particles, thixotropy-imparting agents, and a solvent and satisfying at least one of the following conditions (I) and (II) is coated on a translucent base and then is sheared and cured, (I) a contribution ratio $R^2$ is 0.95 or more in a linear approximate equation of the amount of the thixotropy-imparting agents to be added and the Ti value which is defined by the following equation (A) and in the range from 1.2 to 3.5, (II) a quadratic coefficient a is a negative value in a quadratic polynomial approximate equation, $y = ax^2 + bx + c$ of the amount x of the thixotropy-imparting agents to be added and the Ti value y which is defined by the following equation (A) and in the range from 1.2 to 3.5,

$$\text{Ti value} = \beta_1/\beta_2 \qquad (A)$$

where in the equation (A),
ß1: viscosity at shear rate of 20 (1/s)
ß2: viscosity at shear rate of 200 (1/s).

EP 2 696 222 A2

**(Cont. next page)**

The amount of thixotropy-imparting agents to be added

(a)

Examples

(b)          (c)

Comparative
Examples

Thixotropy-imparting agent distribution state (assumption)

FIG. 2

**Description**

Technical Field

The present invention relates to a method for producing an anti-glare film, an anti-glare film, a coating solution, a polarizing plate, and an image display.

Background Art

Anti-glare films are disposed on the surfaces of various image displays such as cathode ray tubes (CRTs), liquid crystal displays (LCDs), plasma display panels (PDPs), and electroluminescence displays (ELDs) in order to prevent a reduction in contrast due to reflection of external light and reflected glare of images. Various proposals for achieving both of appropriate anti-glare properties and an improvement in physical properties in the anti-glare films have been made.

For example, it has been proposed that a fine particle-containing coating material for forming an anti-glare layer is coated on a base, and when the base is dried, a Benard cell structure is caused to be formed on a surface of a coating layer by convection generated at the time of volatilizing a solvent, and thus, a surface profile has asperities with gradual convex portions (for example, see Patent Document 1).

It also has been proposed that display characteristics are improved by forming a three dimensional conformation flocculated portion by fine particles (for example, see Patent Document 2). In Patent Document 2, a surface adjustment layer is formed on a surface of an anti-glare layer in order to make asperities of the anti-glare layer to be with gradual convex portions, thereby forming a bilayer structure.

Prior Art Documents

Patent Document

Patent Document 1: JP 2008-257255 A
Patent Document 2: Japanese Patent No. 4641846

Summary of Invention

Problem to be Solved by the Invention

In Patent Document 1 described above, a Benard cell is formed utilizing gathering of fine particles on a plane, so that the surface of the anti-glare layer has asperities with gradual convex portions, which results in achievement of both of anti-glare properties and the contrast. However, in order to form a desired profile utilizing a Benard cell, it is required to control the convection generated at the time of volatilizing a solvent when the base is dried as mentioned above. Thus it is required to carefully control production conditions in the coating and drying steps.

On the other hand, in Patent Document 2, in order to make a surface of an anti-glare layer to have asperities with gradual convex portions, a surface adjustment  layer is further formed on a surface of an anti-glare layer formed by flocculating particles, thereby having a bilayer structure. Therefore, the number of steps of producing the anti-glare layer is increased compared with the case of producing an anti-glare layer having a single layer structure. Thus, productivity is inferior.

The inventors of the present invention started a novel development in order to form an anti-glare layer having surface asperities with gradual convex portions by flocculating particles and having not a bilayer structure but a single layer structure, considering the productivity and the cost thereof. In the middle of earnest studies, the inventors of the present invention faced a novel challenge of a defect found on the surface of an anti-glare film by an outward appearance examination (in black room by visual check with a fluorescent lamp) in the case of the anti-glare layer having a single layer structure, formed utilizing flocculation of particles. The anti-glare film having this defect in outward appearance cannot be used as a product and thus is abandoned. For example, when a defect in outward appearance is found in leaflets of polarizing plates using an anti-glare film, even if the number of the defects in outward appearance is only one, all of the polarizing plates should be abandoned. Therefore, when the polarizing plates are for a large-size liquid crystal panel, the abandon area due to the defect in outward appearance is large, so that a yield is really low.

In the studies of a mechanism of this defect in outward appearance, it was found that this defect in outward appearance is caused by a projection generated on the surface of an anti-glare layer. It is considered that this defect in outward appearance of the projection is specifically significant when an anti-glare layer having a surface profile with gradual convex portions is formed. That is, it is considered that a significant defect in outward appearance does not appear in an anti-glare film having rough asperities (high arithmetic average surface roughness Ra) on the surface of the anti-glare layer and superior anti-glare properties because of light scattering caused by an anti-glare effect even if the anti-glare film includes this projection.

In order to further conduct the studies, the inventors of the present invention observed a cross section of this projection with a scanning electron microscope (SEM) and figured out that the cause of generation of this projection is the presence of an overlap of particles in the thickness direction of the anti-glare layer.

It is considered to reduce the number of parts of particles to be used or to employ particles having a small particle size in order to remove this projection from the anti-glare layer. However, in this case, it has been difficult to form surface asperities with gradual convex portions achieving both having anti-glare properties and preventing white blur from occurring. Furthermore, it is considered to prevent an overlap of particles in the thickness direction by increasing the thickness of the anti-glare layer to the particles. However, in this case, a problem of warping the film arises.

In Patent Document 2, a desired surface profile is formed by using particles having superior flocculation characteristics and utilizing the flocculation action of the particles. Specifically, for example, particles having a hydrophobic group or a hydrophilic group on the surface thereof according to a polarity of a solvent are employed. When such particles having superior flocculation characteristics are used, it is possible to relatively easily design a surface profile utilizing flocculation of the particles. However, since the above-described particles have a hydrophobic group or a hydrophilic group on the surface thereof, it is difficult to stably produce an anti-glare film having the same characteristics, and the flocculation state of the particles is prone to be influenced by composition of the coating solution. Therefore, even when production conditions are strictly controlled in the coating and drying steps, it is difficult to stably form a surface profile.

Moreover, particles in a coating solution are swelled in some cases depending on a solvent, and therefore, flocculation characteristics of the particles change over time. Thus, the flocculation state of the particles change over time, and the swelling state of the particles in the coating solution may change in a period of time after preparation of the coating solution to the start of actual production steps. Therefore, the flocculation state is influenced, and it is difficult to stably form a surface profile.

The present invention provides a method for producing an anti-glare film having superior display characteristics of both having anti-glare properties and preventing white blur from occurring, utilizing flocculation of particles. The method for producing an anti-glare film according to the present invention is intended to prevent generation of a projection as a defect in outward appearance on the surface of the anti-glare layer and control a flocculation state of particles without depending on flocculation characteristics of the particles and thus form an anti-glare layer having desired surface asperities.

In order to achieve the aforementioned object, the method for producing an anti-glare film according to the present invention is a method for producing an anti-glare film, including the steps of coating a coating solution on at least one surface of a translucent base to form a coating layer; and curing the coating solution to form an anti-glare layer, wherein the coating solution includes a resin, particles, thixotropy-imparting agents, and a solvent and satisfies at least one of the following conditions (I) and (II). The method further includes the step of shearing the coating solution coated on the translucent base,

(I) a contribution ratio $R^2$ is 0.95 or more in a linear approximate equation of the amount of the thixotropy-imparting agents to be added and the Ti value which is defined by the following equation (A) and in the range from 1.2 to 3.5,
(II) a quadratic coefficient a is a negative value in a quadratic polynomial approximate equation, $y = ax^2 + bx + c$ of the amount x of the thixotropy-imparting agents to be added and the Ti value y which is defined by the following equation (A) and in the range from 1.2 to 3.5,

$$\text{Ti value} = \beta 1/\beta 2 \qquad (A)$$

where in the equation (A),

$\beta 1$: viscosity at shear rate of 20 (1/s)
$\beta 2$: viscosity at shear rate of 200 (1/s).

Another method for producing an anti-glare film according to the present invention is a method for producing an anti-glare film, including the steps of: coating a coating solution on at least one surface of a translucent base to form a coating layer; and curing the coating solution to form an anti-glare layer, wherein the coating solution includes a resin, particles, thixotropy-imparting agents and a solvent, and the method further includes the step of: shearing the coating solution coated on the translucent base, and

the particles are unevenly distributed by the shearing, thereby forming a surface profile of the anti-glare layer.

The anti-glare film according to the present invention is an anti-glare film produced by the method for producing an anti-glare film according to the present invention.

The coating solution according to the present invention is a coating solution for forming an anti-glare layer in an anti-glare film including a translucent base and the anti-glare layer laminated on at least one surface of the translucent base, the coating solution containing: a resin; particles; thixotropy-imparting agents; and a solvent and satisfying at least one of the following conditions (I) and (II),

(I) a contribution ratio $R^2$ is 0.95 or more in a linear approximate equation of the amount of the thixotropy-imparting agents to be added and the Ti value which is defined by the following equation (A) and in the range from 1.2 to 3.5,
(II) a quadratic coefficient a is a negative value in a quadratic polynomial approximate equation, $y = ax^2 + bx + c$ of the amount x of the thixotropy-imparting agents to be added and the Ti value y which is defined by the following equation (A) and in the range from 1.2 to 3.5,

$$\text{Ti value} = \beta 1 / \beta 2 \qquad (A)$$

where in the equation (A),

$\beta 1$: viscosity at shear rate of 20 (1/s)
$\beta 2$: viscosity at shear rate of 200 (1/s).

The polarizing plate according to the present invention is a polarizing plate including: a polarizer and the anti-glare film according to the present invention.

The image display according to the present invention is an image display including: the anti-glare film according to the present invention.

Alternatively, the image display according to the present invention is an image display including: a polarizing plate, wherein the polarizing plate is the polarizing plate according to the present invention.

Effects of the Invention

The present invention provides a method for producing an anti-glare film having superior display characteristics of both having anti-glare properties and preventing white blur from occurring, utilizing flocculation of particles. According to the present invention, generation of a projection as a defect in outward appearance on the surface of the anti-glare layer can be prevented. Moreover, the flocculation state of particles can be controlled without depending on the flocculation characteristics of the particles. Thus, an anti-glare layer having desired surface asperities can be formed.

Specifically, according to the present invention, an excess flocculation of particles in the thickness direction of the anti-glare layer can be prevented by the anti-settling effect of the thixotropy-imparting agents because the coating solution containing particles contains thixotropy-imparting agents. Thus, according to the present invention, generation of a projection as a defect in outward appearance on the surface of the anti-glare layer can be prevented. Moreover, according to the present invention, particles are unevenly distributed by flocculation action of thixotropy-imparting agents caused by shearing a coating solution containing thixotropy-imparting agents, so that a surface profile of an anti-glare layer is formed. As described above, flocculation action of thixotropy-imparting agents caused by shearing a coating solution is utilized in order to unevenly distribute particles in the present invention, so that a flocculation state of particles can be controlled without depending on the flocculation characteristics of the particles.

Brief Description of Drawings

[FIG. 1A] FIG. 1A is a graph showing examples of the relationships between the amount of thixotropy-imparting agents to be added and the Ti value.
[FIG. 1B] FIG. 1B is a graph showing other examples of the relationships between the amount of thixotropy-imparting agents to be added and the Ti value.

[FIG. 2] FIG. 2 is a schematic view showing the relationship of the amount of thixotropy-imparting agents to be added with assumable distribution states of thixotropy-imparting agents.

[FIG. 3] FIG. 3 is a schematic view illustrating a method for calculating the shear velocity V of a coating layer.

[FIG. 4] FIG. 4A is a schematic view showing an example of a method for adjusting the shear velocity V of a coating layer in the method for producing an anti-glare film according to the present invention. FIG. 4B is a schematic view showing another example of a method for adjusting the shear velocity V of a coating layer in the method for producing an anti-glare film according to the present invention.

[FIG. 5] FIG. 5 is a schematic view showing an example of the case where the shear velocity V changes depending on the shear holding time t.

[FIG. 6] FIG. 6 is a schematic view illustrating the definition of the height of a convex portion.

[FIG. 7A] FIG. 7A is a schematic view showing the configuration of an example of the anti-glare film according to the present invention.

[FIG. 7B] FIG. 7B is a schematic view showing a configuration of an example of an anti-glare film including an anti-glare layer containing no thixotropy-imparting agent, which is different from the present invention.

[FIG. 8A] FIG. 8A is a diagram schematically illustrating an assumable mechanism in relation to flocculation of particles in the anti-glare film according to the present invention.

[FIG. 8B] FIG. 8B is a diagram schematically illustrating an assumable mechanism in relation to flocculation of particles in an anti-glare film including an anti-glare layer containing no thixotropy-imparting agent, which is different from the present invention.

[FIG. 9] FIGs. 9A and 9B are schematic views illustrating an example of the definitions of the thickness direction and the in-plane direction of the anti-glare layer in the anti-glare film according to the present invention.

[FIG. 10A] FIG. 10A is a diagram schematically illustrating an assumable mechanism in relation to flocculation of particles in the case where a permeable layer is formed in the anti-glare film according to the present invention.

[FIG. 10B] FIG. 10B is a diagram schematically illustrating an assumable mechanism in relation to flocculation of particles in the case where a permeable layer is formed in an anti-glare film including an anti-glare layer containing no thixotropy-imparting agent, which is different from the present invention.

[FIG. 11] FIG. 11 is a graph showing the relationships between the amount of thixotropy-imparting agents to be added and the Ti value in the examples and the comparative examples. The graph includes linear approximate equations of the amount of thixotropy-imparting agents to be added and the Ti value.

[FIG. 12] FIG. 12 is a graph showing the relationships between the amount of thixotropy-imparting agents to be added and the Ti value in the examples and the comparative examples. The graph includes quadratic polynomial approximate equations of the amount of thixotropy-imparting agents to be added and the Ti value.

[FIG. 13] FIG. 13A is a photograph obtained by observing a surface of an anti-glare layer in an anti-glare film of Example 1 with an optical microscope (semi-transmissive mode). In FIG. 13A, a scale is 50 $\mu$m. FIG. 13B is a schematic view showing a distribution of particles observed in the photograph of FIG. 13A.

[FIG. 14] FIG. 14A is a photograph obtained by observing a surface of an anti-glare layer in an anti-glare film of Comparative Example 4 with an optical microscope (semi-transmissive mode). In FIG. 14A, a scale is 50 $\mu$m. FIG. 14B is a schematic view showing a distribution of particles observed in the photograph of FIG. 14A.

Description of Embodiments

The present invention is a method for producing an anti-glare film, including coating a coating solution on at least one surface of a translucent base and curing the coating solution to form an anti-glare layer. Then, by using a coating solution shown below and shearing the coating solution coated on the translucent base, an anti-glare film having the above-described effect can be produced.

(1) action of thixotropy-imparting agents contained in a coating solution, (2) conditions of the coating solution to be used, and (3) a step of shearing the coating solution are described in detail below in this order. The present invention, however, is not limited by the following description.

<(1) Action of thixotropy-imparting agents contained in coating solution>

The coating solution for use in the present invention contains a resin, particles, thixotropy-imparting agents, and a solvent. Since the coating solution contains thixotropy-imparting agents having an anti-settling effect, generation of a projection as a defect in outward appearance on the surface of the anti-glare layer can be prevented.

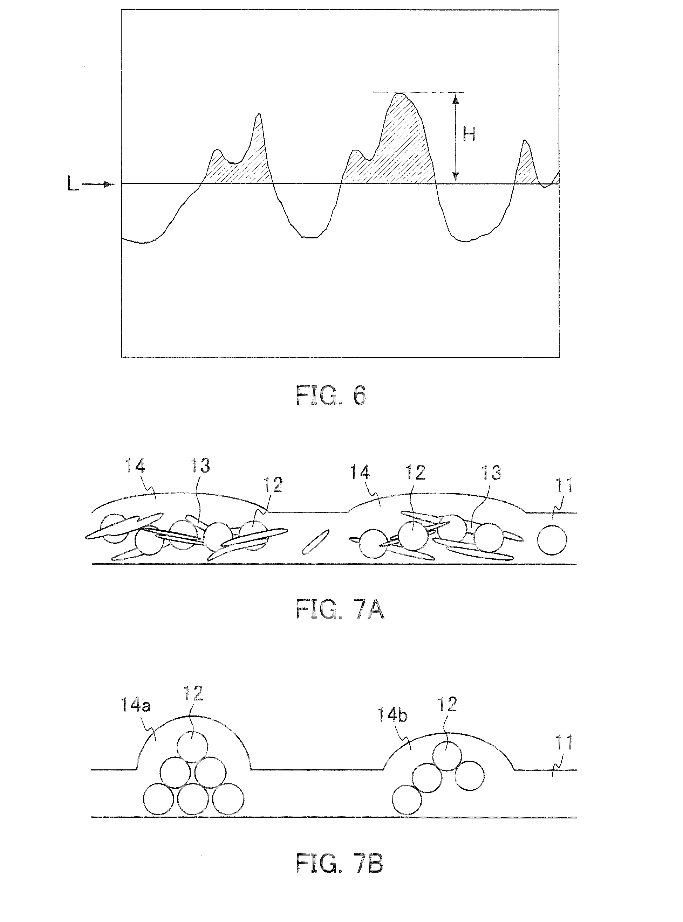

FIG. 7A schematically shows a configuration of an example of the anti-glare film obtained by the method for producing an anti-glare film according to the present invention. As shown in FIG. 7A, particles 12 and thixotropy-imparting agents 13 are flocculated in an anti-glare layer 11, so that convex portions 14 are formed on the surface of the anti-glare layer 11. The flocculation state of the particles 12 and the thixotropy-imparting agents 13 is not particularly limited, and the thixotropy-imparting agents 13 are prone to be present at least around the particles 12. In flocculated portions forming the convex portions 14, particles 12 are present in the state of being gathered in one direction in an in-plane direction of the anti-glare layer 11. Thus, the convex portions 14 become gradual convex portions. In contrast, in the case where the anti-glare layer contains no thixotropy-imparting agent, as shown in the schematic view of FIG. 7B, particles 12 are flocculated not only in the in-plane direction but also the thickness direction of the anti-glare layer 11 in an anti-glare layer 11 to form convex portions 14a and 14b. The convex portions 14a and 14b are formed on the surface of the anti-glare layer 11 by the flocculation of the particles 12 in the in-plane direction and the thickness direction, so that a defect in outward appearance and white blur are prone to occur.

It is assumed that the above-mentioned gradual convex portions are formed by the following mechanism. The present invention, however, is not at all limited by this assumption. The following assumption is described with reference to an example of forming an anti-glare layer by forming a coating layer by coating the coating solution (anti-glare layer-forming material) containing a solvent on a translucent base.

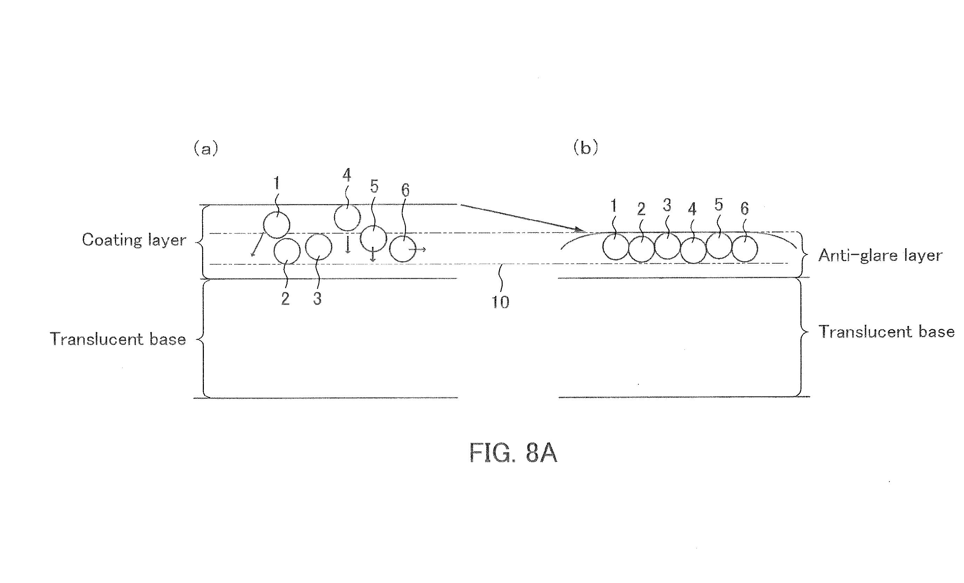

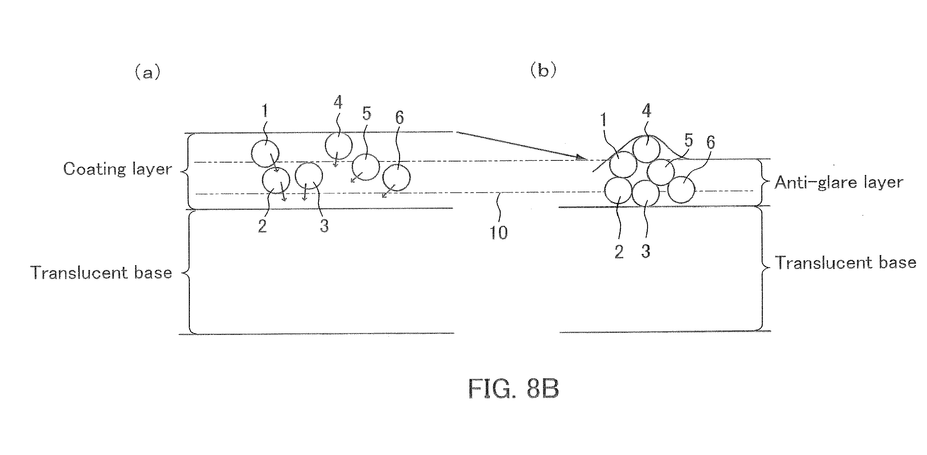

FIG. 8A is a diagram schematically showing the state of a cross section in the thickness direction of the anti-glare film according to the present invention, viewed from a side surface in order to illustrate a mechanism of the flocculation state in the anti-glare layer of the anti-glare film according to the present invention. FIG. 8B is a diagram schematically showing a flocculation state of particles, which is different from the present invention. In FIGs. 8A and 8B, (a) shows the state of forming a coating layer by coating or the like the anti-glare layer-forming material containing a solvent to a translucent base, and (b) shows the state of the anti-glare layer formed by removing the solvent from the coating layer.

An anti-glare layer is formed using an anti-glare layer-forming material containing a resin, particles, thixotropy-imparting agents, and a solvent in FIG. 8A. In contrast, an anti-glare layer-forming material contains no thixotropy-imparting agent in FIG. 8B. In FIG. 8A, the thixotropy-imparting agents are not shown to make the diagram more readable.

The mechanism of forming the above-mentioned gradual convex portions is described below with reference to FIG. 8A. Note here that this mechanism is a mere assumption and does not limit the present invention. That is, as shown in (a) and (b) of FIG. 8A, the thickness of the coating layer is shrunk (reduced) by removing the solvent contained in the coating layer. The lower surface side (back surface side) of the coating layer is terminated by the translucent base, and thus the coating layer is shrunk from the upper surface side (the front surface side) of the coating layer. Particles (e.g., particles 1, 4, and 5) present in a portion from which the thickness of the coating layer is reduced in (a) of FIG. 8A are prone to move to the lower surface side of the coating layer by the reduction in thickness. On the other hand, a movement, to the lower surface side, of particles (e.g., particles 2, 3, and 6) present in a position relatively lower on the lower surface side, which is not affected or is less prone to be affected by the change in the thickness is suppressed by an anti-settling effect (thixotropic effect) of the thixotropy-imparting agents contained in the anti-glare layer-forming material (e.g., the particles do not move to the side lower than the double-dashed chain line 10). Therefore, even when the coating layer is shrunk, the particles (particles 2, 3, and 6) on the lower surface side remain in almost the same position without being pushed toward the lower side (back surface side) by the particles (particles 1, 4, and 5) moving from the front surface side. Since the particles (particles 2, 3, and 6) on the lower surface side remain in almost the same position, the particles (particles 1, 4, and 5) moving from the front surface side move to positions beside the particles on the lower surface side (in an in-plane direction of the coating layer) in which the particles on the lower surface side are not present. The particles in the anti-glare layer of the anti-glare film according to the present invention are present (unevenly distributed) in the state of gathering in an in-plane direction of the anti-glare layer as described above.

The particles in the anti-glare layer are flocculated in an in-plane direction of the anti-glare layer as described above, so that the surface profile of the anti-glare layer is formed. Moreover, when the anti-glare layer contains thixotropy-imparting agents having an anti-settling effect, the excess flocculation of the particles in the thickness direction of the anti-glare layer is avoided. Thus, formation of a projection as a defect in outward appearance on the surface of the anti-glare layer can be prevented.

In contrast, in the case where the anti-glare layer-forming material contains no thixotropy-imparting agent, the anti-settling effect of thixotropy-imparting agents is not exerted on particles. Thus, by the shrinkage of the thickness, particles (particles 2, 3, and 6) on the lower surface side are settled and gathered to the translucent base surface side, together with the other particles (particles 1, 4, and 5) on the upper surface side as shown in (a) of FIG. 8B (for example, particles move and are gathered on the lower surface side of a chain double-dashed line 10), for example. Thus, as shown in (b) of FIG. 8B, portions of excessively flocculating the particles in the thickness direction of the anti-glare layer are generated in some cases. Then, it is assumed that the portions become projections as defects in outward appearance on the surface of the anti-glare layer.

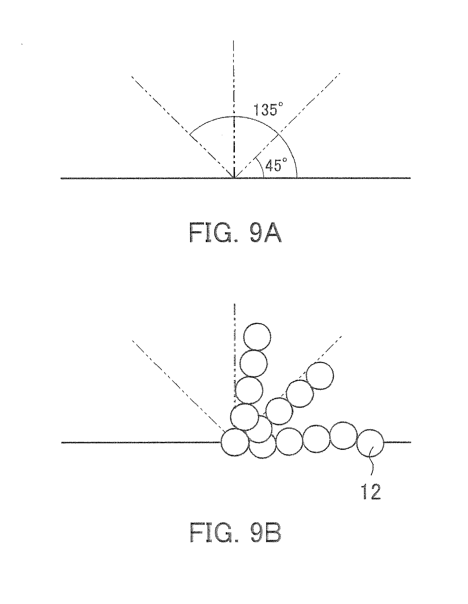

As long as, the convex portions in the anti-glare film according to the present invention are gradual convex portions which can prevent generation of the projection as a defect in outward appearance on the surface of the anti-glare layer, some of the particles may be present in positions in which the particles directly or indirectly overlap in the thickness direction of the anti-glare layer, for example. In the case where the overlap of the particles is represented by the number of overlapping particles, the "thickness direction" of the anti-glare layer is, for example, as shown in the schematic views of FIG. 9A and 9B, a direction in a range from 45° to 135° of an angle with the in-plane direction of the translucent base (in-plane direction of the anti-glare layer). When the thickness (d) of the antiglare layer is in the range from 3 to 12 μm, the particle size (D) of the particles is in the range from 2.5 to 10 μm, and a relationship between the thickness (d) and the particle size (D) is $0.3 \leq D/d \leq 0.9$, the number of overlapping particles in the thickness direction of the anti-glare layer is preferably 4 or less, more preferably 3 or less, for example.

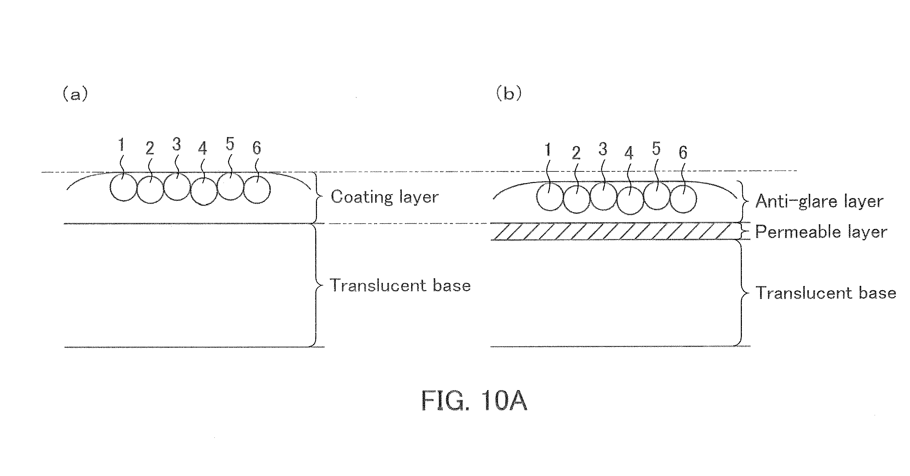

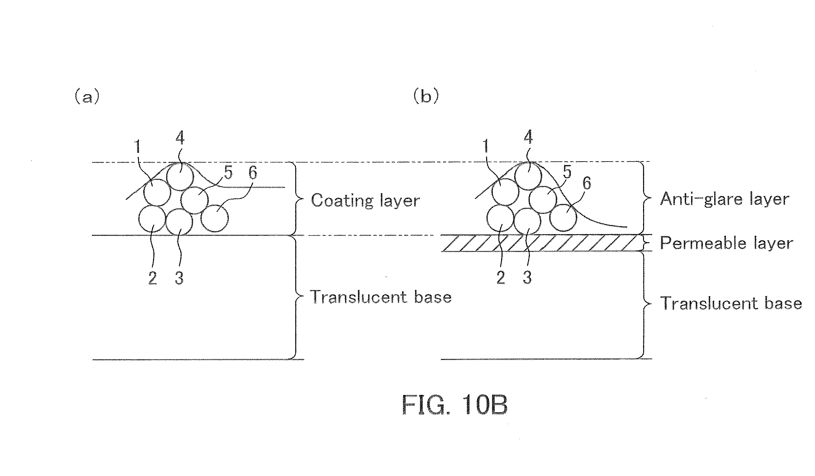

Next, the case where the above-mentioned permeable layer is formed between the translucent base and the anti-glare layer in the above-mentioned assumable mechanism is described with reference to the diagrams of FIGs. 10A and 10B. FIG. 10A is a diagram with respect to the anti-glare film according to the present invention as in the case of illustrating with reference to FIG. 8A. FIG. 10B is a diagram with respect to an anti-glare film which is different from the present invention as in the case of illustrating with reference to FIG. 8B. In FIGs. 10A and 10B, (a) shows the state of the middle of forming an anti-glare layer by removing a solvent from a coating layer, and (b) shows the state of the anti-glare layer formed by removing a solvent from a coating layer. In FIGs. 10A and 10B, the permeable layer is indicated by oblique hatching. Note here that the present invention is not at all limited by the following description.

The anti-glare film according to the present invention is described with reference to FIG. 10A. As shown in (a) and (b) of FIG. 10A, the thickness of a coating layer is shrunk (reduced) by removing a solvent contained in the coating layer. Thus, an anti-glare layer is formed. Then, a resin contained in an anti-glare layer-forming material is permeated through a translucent base with the formation of the anti-glare layer. Thus, a permeable layer is formed between the anti-glare layer and the translucent base. As shown in (a) of FIG. 10A, before the permeable layer is formed, the particles are prone to be present in the state of being apart from the translucent base without being in contact with the translucent base by the anti-settling effect of the thixotropy-imparting agents. Then, when the permeable layer is formed, the resin on the translucent base side, i.e., the resin on the lower side of the particles (translucent base side) is mainly permeated through the permeable layer. Thus, in the present invention, following the permeation of the resin through the translucent base, a group of particles flocculated in the in-plane direction of the anti-glare layer and the resin covering them move together to the translucent base side. That is, they move to the translucent base side as shown in (b) of FIG. 10A while maintaining the flocculation state of the particles shown in (a) of FIG. 10A. Thus, the group of particles and the resin covering them on the front surface side of the anti-glare layer move as if falling down to the translucent base side as a whole while maintaining the surface profile. Thus, it is assumed that the surface profile of the anti-glare layer of the anti-glare film according to the present invention is less prone to change.

Moreover, the coating solution has thixotropy (thixotropic properties) by the thixotropy-imparting agents in the present invention. Thus, it is assumed that the resin composing a convex portion by covering a group of particles is less prone to move to the transparent base side even when the permeable layer is formed so as to be thick. Combined with such effect, it is assumed that the surface profile of the anti-glare layer is less prone to change in the anti-glare film according to the present invention.

As described above, it is assumed that the surface profile of the anti-glare layer is less prone to change in the present invention by a synergistic effect of a positional relationship between the particles in the thickness direction of the anti-glare layer and the translucent base and thixotropic properties of the thixotropy-imparting agents even if the anti-glare film includes the permeable layer.

The case of an anti-glare film containing no thixotropy-imparting agent, which is different from the present invention is described with reference to FIG. 10B. When the anti-glare layer-forming material contains no thixotropy-imparting agent, the anti-settling effect of the thixotropy-imparting agents is not exerted on the particles as mentioned above. Thus, as shown in (a) of FIG. 10B, the particles are prone to be present in positions of being in contact with the translucent base. Furthermore, the particles cannot move to a permeable layer formed by permeating the resin through the translucent base. Therefore, when the permeable layer is formed, a group of particles shown in (a) of FIG. 10B remains in the position in the state of being in contact with the translucent base, and only the resin around the group of particles is permeated through the translucent base. Thus, it is assumed that the amount of the resin on the surface of the anti-glare layer relative to the group of particles remaining in the position is reduced as shown in (b) of FIG. 10B. Moreover, it is assumed that the surface profile of the anti-glare layer is prone to change, and it makes the projections as defects in outward appearance on the surface of the anti-glare layer further conspicuous.

<(2) Conditions of coating solution to be used>

In the method for producing an anti-glare film according to the present invention, composition of the coating solution is not particularly limited as long as the particles can be unevenly distributed by shearing the coating solution coated on the translucent base.

In the present invention, as the coating solution, a coating solution containing a resin, particles, thixotropy-imparting agents, and a solvent and satisfying at least one of the following conditions (I) and (II) may be used,

(I) a contribution ratio $R^2$ is 0.95 or more in a linear approximate equation of the amount of the thixotropy-imparting agents to be added and the Ti value which is defined by the above equation (A) and in the range from 1.2 to 3.5,
(II) a quadratic coefficient a is a negative value in a quadratic polynomial approximate equation, $y = ax^2 + bx + c$ of the amount x of the thixotropy-imparting agents to be added and the Ti value y which is defined by the following equation (A) and in the range from 1.2 to 3.5.

An anti-glare film having superior display characteristics of both having anti-glare properties and preventing white blur from occurring can be produced by using a coating solution satisfying at least one of the conditions (I) and (II) and performing the step of shearing the coating solution described below. The conditions ((I) and (II)) of the coating solution to be used are described in detail below.

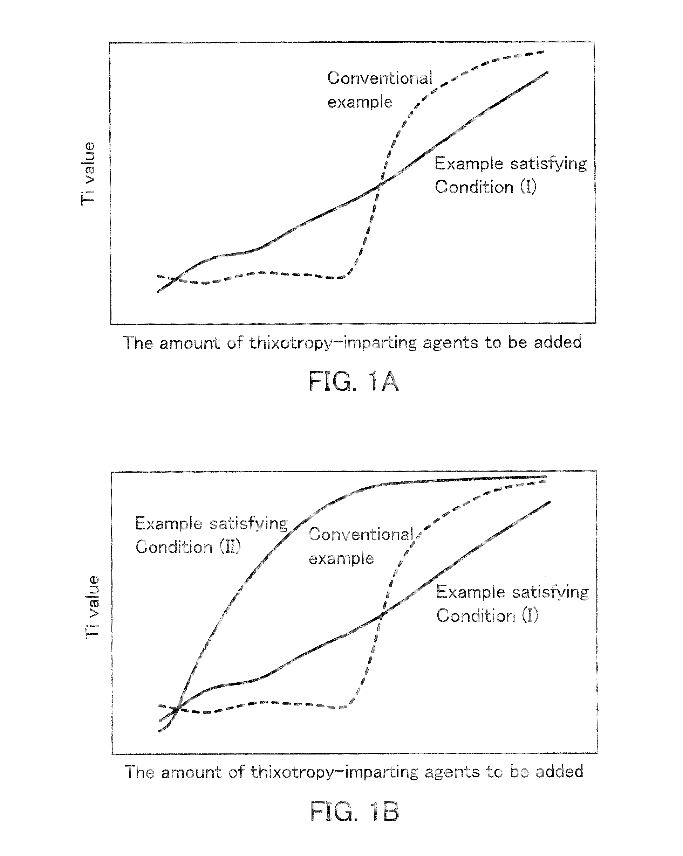

A graph of FIG. 1A shows the relationships between the amount of thixotropy-imparting agents to be added and the Ti value in an example of a coating solution satisfying the condition (I) (an example satisfying the condition (I)) and an example (conventional example) of a coating solution for use in the conventional method for producing an anti-glare film. In FIG. 1A, a coating solution of "the example satisfying the condition (I)" can be used in the method for producing an anti-glare film according to the present invention, and a coating solution of "the conventional example" cannot be used in the same. In order to obtain an intended anti-glare film, the inventors of the present invention selected a resin, particles, thixotropy-imparting agents, and the like and adjusted the amounts thereof to be added. From the earnest studies, the inventors of the present invention found that characteristics of anti-glare properties and white blur differs in each of the anti-glare films obtained by the use of the respective coating solutions each having a comparable amount of the thixotropy-imparting agents to be added and a comparable Ti value. That is, even when a coating solution having the amount of the thixotropy-imparting agents to be added and the Ti value in the predetermined ranges is provided, desired characteristics cannot be obtained in some cases.

Comparing a coating solution in the case of obtaining an anti-glare film having favorable characteristics and a coating solution in the case of obtaining an anti-glare film having insufficient characteristics, it was found that there was a significant difference in a linear approximate equation or a quadratic polynomial approximate equation, of the amount of the thixotropy-imparting agents to be added and the Ti value.

As shown in the graph of "the example satisfying the condition (I)" of FIG. 1A, when the amount of the thixotropy-imparting agents to be added and the Ti value have an almost linear relationship, the gradient of the Ti value with an increase in the amount of the thixotropy-imparting agents to be added is high, so that an anti-glare film having favorable characteristics can be obtained. In contrast, as shown in the graph of "the conventional example" of FIG. 1A, when the amount of the thixotropy-imparting agents to be added and the Ti value do not have a linear relationship, and the gradient of the Ti value with an increase in the amount of the thixotropy-imparting agents to be added is low, only an anti-glare film having insufficient characteristics is obtained. Then, it was found that when a contribution ratio $R^2$ is 0.95 or more in a linear approximate equation of the amount of the thixotropy-imparting agents to be added and the Ti value (condition (I)), or a quadratic coefficient a is a negative value in a quadratic polynomial approximate equation, $y = ax^2 + bx + c$, of the amount x of the thixotropy-imparting agents to be added and the Ti value y (condition (II)), the coating solution can be used as a coating solution for obtaining an intended anti-glare film. The contribution ratio $R^2$ preferably is 0.96 or more.

A graph of FIG. 1B shows an example different from an example of FIG. 1A, showing the relationship between the amount of thixotropy-imparting agents to be added and the Ti value. FIG. 1B is the same as FIG. 1A except that a graph (profile) of an "example satisfying the condition (II)" is added in addition to the graph of "the example satisfying the condition (I)" and "the conventional example" of FIG. 1A. The profile of the "example satisfying the condition (II)" is an example in the case where the coating solution satisfies the condition (II), i.e., the condition where a quadratic coefficient a is a negative value in a quadratic polynomial approximate equation, $y = ax^2 + bx + c$, of the amount x of the thixotropy-imparting agents to be added and the Ti value y in the range from 1.2 to 3.5. As shown in FIG. 1B, in the profile of "the example satisfying the condition (II)", the gradient of the Ti value is high in a region in which the amount of the thixotropy-imparting agents to be added is small, and then an increase in Ti value becomes slow. In the method for producing an anti-glare film according to the present invention, an anti-glare film having superior display characteristics of both having anti-glare properties and preventing white blur from occurring can be formed utilizing flocculation of particles by causing the coating solution to satisfy at least one of the conditions (I) and (II). In the present invention, it is sufficient when the particles are unevenly distributed by shearing the coating solution coated on the translucent base as mentioned above even if the coating solution does not satisfy at least one of the conditions (I) and (II).

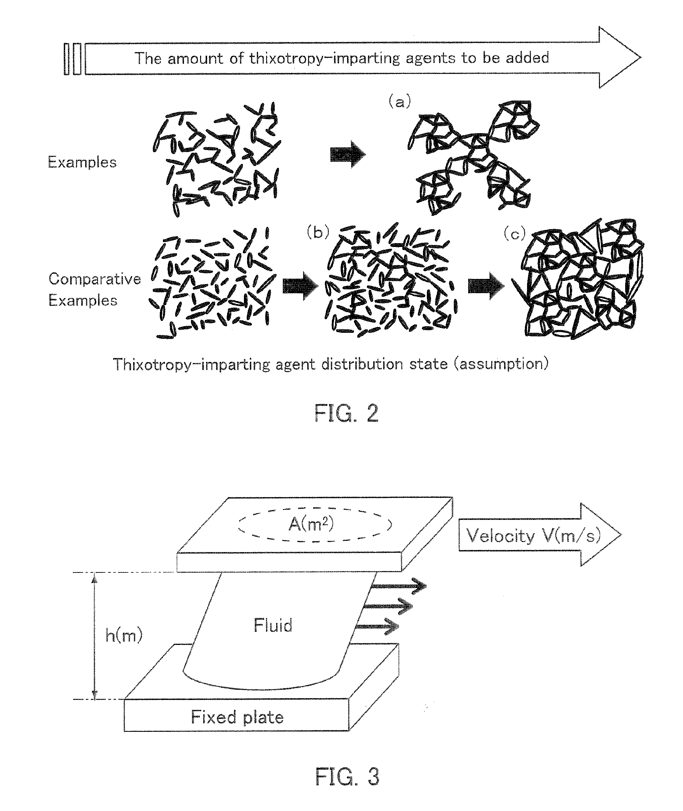

A schematic view of FIG. 2 shows the relationship between the amount of thixotropy-imparting agents to be added and an assumable distribution state of thixotropy-imparting agents. The distribution state of thixotropy-imparting agents shown in FIG. 2 is a mere example of an assumable distribution state, and the present invention is not at all limited by the assumption.

In a coating solution by which an intended anti-glare film is obtained, a network structure of the thixotropy-imparting agents is formed as shown in (a) of FIG. 2, the thixotropy-imparting agents form a plurality of networks by flocculation in the coating solution, and the networks are present independently from the other networks even if the amount of thixotropy-imparting agents to be added is small. That is, the thixotropy-imparting agents are unevenly distributed.

In contrast, in the case of a coating solution by which only an anti-glare film having insufficient characteristics can be obtained, when the amount of thixotropy-imparting agents to be added is small, a network structure of the thixotropy-imparting agents is not formed as shown in (b) of FIG. 2. In such coating solution, the network structure is formed as shown in (c) of FIG. 2 only after a certain amount of thixotropy-imparting agents is added, thereby exerting thixotropic properties. Thixotropy-imparting agents are not evenly distributed in the state of (c), and the networks are formed in the entire coating solution.

<(3) Step of shearing coating solution>

The inventors of the present invention further found that even when a coating solution satisfying the condition (X) or at least one of the conditions (I) and (II) is used, an intended anti-glare film cannot be obtained without shearing this coating solution. That is, according to the present invention, an intended anti-glare film having anti-glare properties and preventing white blur from occurring can be produced by forming a surface profile of the anti-glare layer by unevenly distributing particles by shearing.

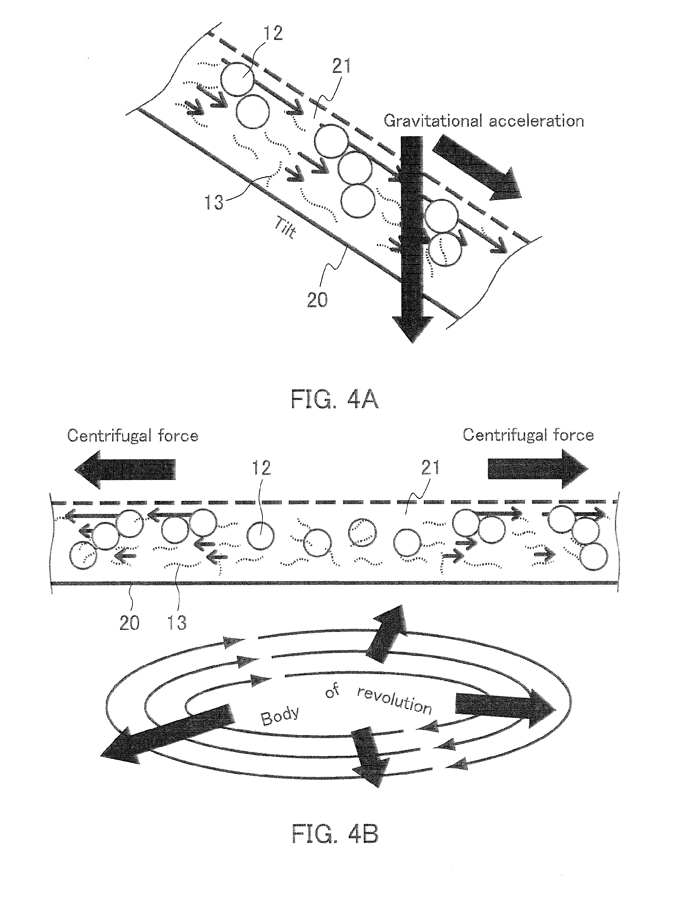

FIGs. 4A and 4B are illustrations each showing an example of the step of shearing a coating solution coated on a translucent base. FIG. 4A is an illustration showing an example of the step of shearing a coating solution coated on a translucent base by tilting the translucent base. FIG. 4B is an illustration showing an example of the step of shearing a coating solution coated on a translucent base by applying centrifugal force to the translucent base.

In the formation of the anti-glare layer, the shear distance S of the coating layer, defined by the following equation (B) is preferably in the range from $0.005 \times 10^{-9}$ to $120 \times 10^{-9}$ m. The shear distance S is more preferably from $0.005 \times 10^{-9}$ to $60 \times 10^{-9}$ m, yet more preferably from $0.01 \times 10^{-9}$ to $15 \times 10^{-9}$ m.

$$S = \int V dt \qquad (B)$$

In the equation (B),

  S: shear distance (m)
  V: shear velocity (m/s)
  t: shear holding time (s).

The shear velocity V may change over time or may be constant.

A method for calculating the shear velocity V of the coating layer is described with reference to FIG. 3. Assuming that the mass of the fluid shown in FIG. 3 is represented by m (kg), the thickness of the fluid is represented by h (m), and the area of contact between a fixed flat plate and the fluid is represented by A ($m^2$), the velocity (shear velocity) V (m/s) at the upper part of the fluid can be determined by the equation, $V = mah/A\eta$. In the equation, a represents the acceleration ($m/s^2$), and $\eta$ represents the viscosity (Pa•s) of the fluid. The specific gravity k ($kg/m^3$) of the fluid is determined by $k = m/hA$. Thus, $V = mah/A\eta = kah^2/\eta$. Therefore, as mentioned above, the shear velocity V of the coating layer on the translucent base can be defined by the following equation (C)

$$V = kah^2/\eta \qquad (C)$$

in the equation (C),

  k: specific gravity of coating layer ($kg/m^3$)
  a: acceleration ($m/s^2$)
  h: thickness of coating layer (m)
  $\eta$: viscosity of coating layer (Pa•s).

The acceleration a may change over time or may be constant. In the case where the acceleration a and the shear velocity V do not change over time and are constant, the shear distance S is represented by the following equation (B'),

$$S = V \times t \qquad (B').$$

As can be seen from the equations (B) and (B'), the shear velocity V of the coating layer is increased by (1) increasing the acceleration a, (2) increasing the thickness h of the coating layer, or (3) reducing the viscosity $\eta$ of the coating layer. The increase in shear velocity V of the coating layer causes a difference in movement rate between the resin and the particles in the thickness direction of the coating layer. Therefore, the particles increase opportunities of contacting with each other. Thus, the flocculation of the particles (shear flocculation) occurs. The shear flocculation is prone to occur by the use of a coating solution containing thixotropy-imparting agents. The shear velocity V of the coating layer is preferably in the range from $0.05 \times 10^{-9}$ to $2.0 \times 10^{-9}$ m/s, more preferably from $0.05 \times 10^{-9}$ to $1.0 \times 10^{-9}$ m/s.

A method for adjusting the shear velocity V of the coating layer is described with reference to FIGs. 4A and 4B. In FIGs. 4A and 4B, the numeral 20 represents a translucent base, the numeral 21 represents a coating layer, the numeral 12 represents particles, and the numeral 13 represents thixotropy-imparting agents. FIG. 4A is an example of increasing the shear velocity V of the coating layer 21 by tilting the translucent base 20. For example, as shown in FIG. 4A, a component along the tilt direction of the gravitational acceleration has the acceleration a by tilting the translucent base 20, so that the shear velocity V of the coating layer 21 can be increased. FIG. 4B is an example of increasing the shear velocity V of the coating layer 21 by rotating the translucent base 20 maintained to be horizontal on a body of revolution. For example, as shown in FIG. 4B, the acceleration a is increased by the centrifugal force caused by rotating the translucent base 20 maintained to be horizontal on a body of revolution, so that the shear velocity V of the coating layer 21 can be increased.

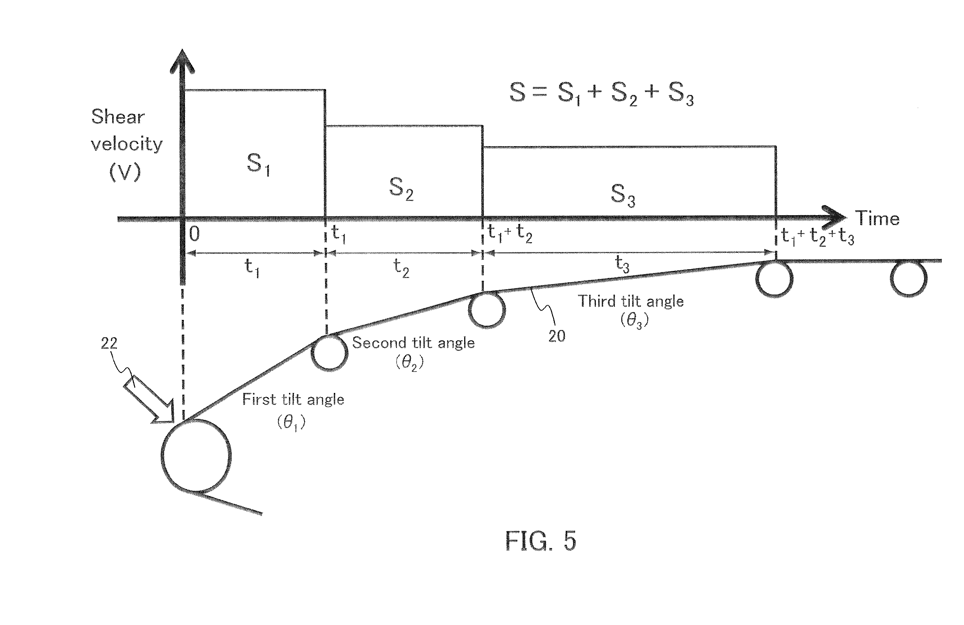

FIG. 5 shows an example of the case where the shear velocity V changes over time. FIG. 5 is a view showing the case where the shear velocity V changes from the shear velocity $V_1$ (in the shear holding time $t_1$) to the shear velocity $V_2$ (in the shear holding time $t_2$) and further changes to the shear velocity $V_3$ (in the shear holding time $t_3$). In this case, for example, the shear distance S is calculated by the sum ($S = S_1 + S_2 + S_3$) of shear distances at the respective shear velocities, i.e., the shear distance $S_1$ ($V_1 \times t_1$), the shear distance $S_2$ ($V_2 \times t_2$), and the shear distance $S_3$ ($V_3 \times t_3$). In FIG. 5, a coating solution 22 is coated on a translucent base 20 at the left side of FIG. 5 with a transfer of the translucent base 20 from the left side to the right side of FIG. 5 on a coating line. Then a tilt angle at the time of the transfer of the translucent base 20 changes from the first tilt angle $\theta_1$ to the second tilt angle $\theta_2$ and further changes to the third tilt angle $\theta_3$, so that the acceleration a changes. Thus, the shear velocity V changes as mentioned above.

As described above, a surface profile of an anti-glare layer is formed utilizing flocculation of particles in the present invention. In the present invention, an anti-glare film having superior display characteristics of both having anti-glare properties and preventing white blur from occurring can be produced by using the coating solution and shearing the coating solution coated on a translucent base. The reason of this is uncertain but is assumed as follows. The present invention, however, is not at all limited by this assumption.

A coating solution has a network structure of thixotropy-imparting agents as described above (see (a) of FIG. 2) by shearing the coating solution coated on the translucent base, and the thixotropy-imparting agents form networks by flocculation in the coating solution, and the networks are present independently from the other networks even if the amount of thixotropy-imparting agents to be added is small. That is, the thixotropy-imparting agents are unevenly distributed. By unevenly distributing the thixotropy-imparting agents as described above, particles are unevenly distributed, and a surface profile is formed. Thus, as shown in FIG. 7A, convex portions 14 become gradual convex portions.

In contrast, in the state shown in (c) of FIG. 2, as described above, the thixotropy-imparting agents are not unevenly distributed as shown in (a) of FIG. 2 and are gathered densely in the entire coating solution regardless of shearing or not shearing a coating solution. Therefore, the thixotropy-imparting agents cannot move freely in the coating solution and are not flocculated. Thus, particles are not unevenly distributed (flocculated) by flocculation action of the thixotropy-imparting agents. Therefore, when the coating solution in the state shown in (c) of FIG. 2 is used, a surface profile not having a gradual convex portions and having fine asperities is prone to be formed.

Further, in the state shown in (b) of FIG. 2 in which a network structure of thixotropy-imparting agents is not formed, the thixotropy-imparting agents are not flocculated, and asperities required for anti-glare properties are slightly formed even when a coating solution is sheared. Thus, sufficient anti-glare properties cannot be obtained.

As described above, particles are unevenly distributed by flocculation action of thixotropy-imparting agents caused by shearing a coating solution coated on a translucent base in order to flocculate the thixotropy-imparting agents, and a surface profile (convex portions) of an anti-glare layer is formed. Therefore, generation of a projection as a defect in outward appearance on the surface of the anti-glare layer can be prevented, and a flocculation state of the particles can be controlled without depending on the flocculation characteristics of the particles. Thus, an anti-glare layer having desired surface asperities can be formed.

Furthermore, in the present invention, for example, a coating solution containing particles having superior flocculation characteristics such as particles having a hydrophobic group or a hydrophilic group on the surface thereof can be suitably used. The reason of this is described below. That is, the thixotropy-imparting agents contained in a coating solution have action of suppressing flocculation characteristics on particles having superior flocculation characteristics (action of dispersing particles). As described above, for example, in the case of particles having a hydrophobic group or a hydrophilic group on the surface thereof, it has been difficult to stably produce an anti-glare film having the same characteristics. Even when production conditions are strictly controlled in the coating and drying steps, it has been difficult to stably form a surface profile. However, by the method according to the present invention, a surface profile can be formed stably even in the case of using such particles. Moreover, as described above, particles in a coating solution are swelled in some cases depending on a solvent, and by the swelling, flocculation characteristics of the particles change over time. Thus, there is a problem in that it becomes difficult to stably form a surface profile by influencing the flocculation state of the particles in the coating solution caused by a lapse of time from preparation of the coating solution to the start of actual production steps. According to the present invention, such problem can be prevented from occurring, and a surface profile can be stably formed by employing the step of shearing even when the coating solution containing particles having superior flocculation characteristics is used.

The shear holding time t (time when the shear distance S is in the range from $0.005 \times 10^{-9}$ to $120 \times 10^{-9}$ m) is adjusted preferably in the range from 0.1 to 60 s (seconds), more preferably from 1 to 10 s considering the productivity.

The coating solution preferably has thixotropic properties, and the Ti value thereof is preferably in the range from 1.3 to 3.5, more preferably from 1.4 to 3.2, yet more preferably from 1.5 to 3.0.

When the Ti value is less than 1.3, a defect in outward appearance is prone to occur, and characteristics of anti-glare properties are deteriorated and white blur occurs in some cases. When the Ti value exceeds 3.5, the particles are prone to be in the dispersed state in which the particles are difficult to be flocculated, and thus the anti-glare film according to the present invention is difficult to be obtained.

In the anti-glare film obtained by the method for producing an anti-glare film according to the present invention, as mentioned above, the anti-glare layer includes flocculated portions forming convex portions on a surface of the anti-glare layer by flocculating the particles and the thixotropy-imparting agents, and in the flocculated portions, the particles are present in the state of being gathered in one direction in an in-plane direction of the anti-glare layer. Thus, the convex portions become gradual convex portions. By including convex portions in such shape, the anti-glare film according to the present invention can maintain anti-glare properties and prevent white blur from occurring and can further make a defect in outward appearance less prone to occur.

The surface profile of the antiglare layer can be designed as appropriate by controlling the flocculation state of the particles contained in the anti-glare layer-forming material. The flocculation state of the particles can be controlled by quality of the material of the particles (e.g., the state of chemical modification on the surfaces of the particles, affinity with a solvent or a resin, or the like), the kinds or the combination of a resin (binder) and a solvent, and the like, for example. The anti-glare layer-forming material (coating solution) can be used as a coating solution for obtaining a suitable surface profile as long as the contribution ratio $R^2$ is 0.95 or more in a linear approximate equation of the amount of the thixotropy-imparting agents to be added and the Ti value in the range from 1.3 to 3.5. Alternatively, the anti-glare layer-forming material (coating solution) can be used as a coating solution for obtaining a suitable surface profile as long as a quadratic coefficient a is a negative value in a quadratic polynomial approximate equation, $y = ax^2 + bx + c$, of the amount x of the thixotropy-imparting agents to be added and the Ti value y in the range from 1.3 to 3.5. In the present invention, the flocculation state of the particles can be controlled by the thixotropy-imparting agents contained in the anti-glare layer-forming material. Thus, in the present invention, the flocculation state of the particles can be controlled as mentioned above, and the convex portions can be gradual convex portions.

By forming the anti-glare layer on at least one surface of the translucent base as described above, an anti-glare film can be produced.

As mentioned above, it is preferred that, in the anti-glare film according to the present invention, the anti-glare layer includes flocculated portions forming convex portions on a surface of the anti-glare layer by flocculating the particles, and in the flocculated portions, the particles are present in the state of being gathered in one direction in an in-plane direction of the anti-glare layer. Thus, the convex portions can be further gradual convex portions. By including convex portions in such shape in the anti-glare layer, anti-glare properties of the anti-glare film can be maintained, white blur can be prevented from occurring, and a defect in outward appearance can be less prone to occur.

The coating solution for use in the present invention contains a resin, particles, thixotropy-imparting agents, and a solvent as described above.

<Resin>

Examples of the resin include a heat-curable resin and an ionizing radiation-curable resin cured by ultraviolet and/or light. As the resin, a commercially available heat-curable resin and/or an ultraviolet-curable resin can also be used. As the heat-curable resin and/or the ultraviolet-curable resin, a curable compound having at least one of an acrylate group and a methacrylate group cured by, for example, heat, light (ultraviolet or the like) and/or an electron beam can be used, and examples thereof include a silicone resin, a polyester resin, a polyether resin, an epoxy resin, an urethane resin, an alkyd resin, a spiroacetal resin, a polybutadiene resin, a polythiol polyene resin, and an oligomer and/or a prepolymer of acrylate and/or methacrylate of a polyfunctional compound such as a polyhydric alcohol. They may be used alone or in a combination of two or more of them.

In the resin, a reactive diluent having at least one of an acrylate group and a methacrylate group can be used, for example. As the reactive diluent, any of reactive diluents described in JP 2008-88309 A can be used, and examples thereof include monofunctional acrylate, monofunctional methacrylate, polyfunctional acrylate, and polyfunctional methacrylate. As the reactive diluent, acrylate having a trifunctional group or more or methacrylate having a trifunctional group or more is preferable because the hardness of the anti-glare layer can be superior. Examples of the reactive diluent also include butanediol glycerin ether diacrylate, acrylate of isocyanuric acid, and methacrylate of isocyanuric acid. They may be used alone or in a combination of two or more of them.

<Particles>

The main function of the particles for forming the anti-glare layer is to impart anti-glare properties by forming surface asperities of the anti-glare layer and control the haze value of the anti-glare layer. The haze value of the anti-glare layer can be designed by controlling the difference in refractive index between the particles and the resin. Examples of the particles include inorganic particles and organic particles. The inorganic particles are not particularly limited, and examples thereof include silicon oxide particles, titanium oxide particles, aluminium oxide particles, zinc oxide particles, tin oxide particles, calcium carbonate particles, barium sulfate particles, talc particles, kaolin particles, and calcium sulfate particles. The organic particles are not particularly limited, and examples thereof include a polymethyl methacrylate resin powder (PMMA particles), a silicone resin powder, a polystyrene resin powder, a polycarbonate resin powder, an acrylic styrene resin powder, a benzoguanamine resin powder, a melamine resin powder, a polyolefin resin powder, a polyester resin powder, a polyamide resin powder, a polyimide resin powder, and a polyfluoroethylene resin powder. One kind of the inorganic particles and organic particles may be used alone, or two or more kinds of the same may be used in combination.

The particle size (D) (weight-average particle size) of the particles is preferably in the range from 2.5 to 10 $\mu$m. By setting the weight-average particle size of the particles in the above-described range, the anti-glare film can have further superior anti-glare properties and can prevent white blur from occurring, for example. The weight-average particle size of the particles is more preferably from 3 to 7 $\mu$m. The weight-average particle size of the particles can be measured by the Coulter counter method, for example. For example, a particle size distribution measurement apparatus (COULTER MULTISIZER (trade name), produced by Beckman Coulter, Inc.) using a pore electrical resistance method is employed to measure an electrical resistance of an electrolyte corresponding to the volume of the particles when the particles pass through the pores. Thus, the number and volume of particles are measured and then the weight average particle size is calculated.

The shape of the particles is not particularly limited and may be, for example, an approximately spherical shape in the form of a bead or an indefinite shape such as a powder and is preferably an approximately spherical shape, more preferably an approximately spherical shape with an aspect ratio of 1.5 or less. Most preferably, the particles are spherical particles.

The proportion of the particles in the anti-glare layer is preferably in the range from 0.2 to 12 parts by weight, more preferably from 0.5 to 12 parts by weight, yet more preferably from 1 to 7 parts by weight, relative to 100 parts by weight of the resin. By setting the proportion of the particles in the above-described range, the anti-glare film can have further superior anti-glare properties and can prevent white blur from occurring, for example.

<Thixotropy-imparting agents>

Examples of the thixotropy-imparting agents for forming the anti-glare layer include organoclay, oxidized polyolefin, and denatured urea.

The organoclay is preferably layered clay which has been subjected to an organification treatment in order to improve affinity with the resin. The organoclay may be prepared in-house or a commercially available product. Examples of the commercially available product include LUCENTITE SAN, LUCENTITE STN, LUCENTITE SEN, LUCENTITE SPN, SOMASIF ME-100, SOMASIF MAE, SOMASIF MTE, SOMASIF MEE, and SOMASIF MPE (trade names, produced by CO-OP Chemical Co. Ltd.); S-BEN, S-BEN C, S-BEN E, S-BEN W, S-BEN P, S-BEN WX, S-BEN N-400, S-BEN NX, S-BEN NX80, S-BEN NO12S, S-BEN NEZ, S-BEN NO12, S-BEN NE, S-BEN NZ, S-BEN NZ70, ORGANAIT, ORGANAIT D, and ORGANAIT T (trade names, produced by Hojun Co., Ltd.); KUNIPIA F, KUNIPIA G, and KUNIPIA G4 (trade names, produced by Kunimine Industries, Co. Ltd.); and TIXOGEL VZ, CLAYTONE HT, and CLAYTONE 40 (trade names, produced by Rockwood Additives Limited).

The oxidized polyolefin may be prepared in-house or a commercially available product. Examples of the commercially available product include DISPARON 4200-20 (trade name, produced by Kusumoto Chemicals, Ltd.) and FLOWNON SA300 (trade name, produced by Kyoeisha Chemical Co., Ltd).

The denatured urea is a reactant of an isocyanate monomer or an adduct thereof and organic amine. The denatured urea may be prepared in-house or a commercially available product. The commercially available product can be, for example, BYK410 (produced by BYK-Chemie Corporation).

The proportion of the thixotropy-imparting agents in the coating solution is preferably in the range from 0.2 to 5 parts by weight, more preferably from 0.4 to 4 parts by weight, relative to 100 parts by weight of the resin.

One kind of the thixotropy-imparting agents may be used alone, or two or more kinds of the same may be used in combination.

<Solvent>

The solvent is not particularly limited, and various solvents can be used. The solvents may be used alone or in a combination of two or more of them. There are optimal kinds of solvents and the optimal ratio thereof according to the composition of the resin, the kinds of the particles and the thixotropy-imparting agents, and the contents thereof. The solvent is not particularly limited, and examples thereof include alcohols such as methanol, ethanol, isopropyl alcohol, butanol, and 2-methoxyethanol; ketones such as acetone, methylethylketone, methylisobutylketone, and cyclopentanone; esters such as methyl acetate, ethyl acetate, and butyl acetate; ethers such as diisopropyl ether and propyleneglycol monomethylether; glycols such as ethyleneglycol and propyleneglycol; cellosolves such as ethyl cellosolve and butyl cellosolve; aliphatic hydrocarbons such as hexane, heptane, and octane; and aromatic hydrocarbons such as benzene, toluene, and xylene.

The anti-glare layer-forming material (coating solution) can favorably have thixotropy (thixotropic properties) by selecting a solvent as appropriate. For example, in the case of using organoclay, toluene and xylene can be suitably used alone or in combination. For example, in the case of using oxidized polyolefin, methyl ethyl ketone, ethyl acetate, and propylene glycol monomethyl ether can be suitably used alone or in combination. For example, in the case of using denatured urea, butyl acetate and methyl isobutyl ketone can be suitably used alone or in combination.

<Others, additives>

Various leveling agents can be added to the coating solution. For the purpose of preventing unevenness in coating (causing a surface to be evenly coated), a fluorine-based leveling agent or a silicone-based leveling agent can be used as the leveling agent, for example. In the present invention, a leveling agent can be selected as appropriate according to the case where the surface of the anti-glare layer is required to have anti-smudge properties, the case where an antireflection layer (low refractive index layer) and/or a layer containing interlayer fillers is formed on the anti-glare layer as mentioned below. In the present invention, for example, the coating solution can have thixotropic properties by causing the coating solution to contain thixotropy-imparting agents. Therefore, the unevenness in coating is less prone to occur. Thus, for example, the present invention has an advantage of widening the choice of the leveling agents.

The amount of the leveling agent to be added is, for example, 5 parts by weight or less, preferably in the range from 0.01 to 5 parts by weight, relative to 100 parts by weight of the resin.

A pigment, a filler, a dispersant, a plasticizer, a UV absorber, a surfactant, an anti-smudge agent, an antioxidant, or the like may be added to the coating solution to the extent of not impairing functions of the coating solution. These additives may be used alone or in a combination of two or more of them.

Any of conventionally known photoinitiators described in JP 2008-88309 A can be used in the coating solution, for example.

In the present invention, it is preferred that a coating solution is coated on at least one surface of the translucent base to form a coating layer, and the shear distance S of the coated coating solution is set in the range from $0.005 \times 10^{-9}$ to $120 \times 10^{-9}$ m.

As a method for forming a coating layer by coating the coating solution on the translucent base, a coating method such as a fountain coating method, a die coating method, a spin coating method, a spray coating method, a gravure coating method, a roller coating method, or bar coating method can be used, for example.

<Transparent plastic film base>

The transparent plastic film base is not particularly limited and preferably has superior light transmittance of visible light (preferably 90% or more of light transmittance) and superior transparency (preferably 1% or less of haze value), and examples thereof include transparent plastic film bases described in JP 2008-90263 A. As the transparent plastic film base, a base having optically low birefringence is preferably used. The anti-glare film according to the present invention can be used as a protective film in a polarizing plate, for example. In this case, the transparent plastic film base preferably is a film formed of triacetylcellulose (TAC), polycarbonate, an acrylic polymer, polyolefin having a cyclic structure or a norbornene structure, or the like. In the present invention, the transparent plastic film base may be a polarizer itself as mentioned below. With such configuration, it is not necessary to include a protective layer formed of TAC or the like, so that the structure of the polarizing plate can be simplified. Thus, the number of steps of producing the polarizing plate or an image display can be reduced, so that production efficiency can be improved. Further, with such configuration, the polarizing plate can be thinner. In the case where the transparent plastic film base is a polarizer, the anti-glare layer serves as a conventional protective layer. Furthermore, with such configuration, the anti-glare film functions also as a cover plate in the case where the anti-glare film is attached to the surface of the liquid crystal cell, for example.

The thickness of the transparent plastic film base in the present invention is not particularly limited and is, for example, preferably in the range from 10 to 500 $\mu$m, more preferably from 20 to 300 $\mu$m, optimally from 30 to 200 $\mu$m from the viewpoint of strength, workability such as handleability and film thinness, for example. The refractive index of the transparent plastic film base is not particularly limited and is, for example, in the range from 1.30 to 1.80, preferably from 1.40 to 1.70.

<Permeable layer>

When the translucent base in the anti-glare film according to the present invention is formed of a resin or the like, it is preferred that there is a permeable layer at the interface between the translucent base and the anti-glare layer. The permeable layer is formed by permeating a resin component contained in the anti-glare layer-forming material through the translucent base. When the permeable layer is formed, adhesion between the translucent base and the anti-glare layer can be improved, which is preferable. The thickness of the permeable layer is preferably in the range from 0.2 to 3 $\mu$m, more preferably from 0.5 to 2 $\mu$m. For example, when the translucent base is triacetylcellulose, and the resin contained in the anti-glare layer is an acrylic resin, the permeable layer can be formed. The permeable layer can be checked, and the thickness thereof can be measured, by observing a cross section of the anti-glare film using a transmission electron microscope (TEM), for example.

Even when the anti-glare film according to the present invention is applied to such anti-glare film including a permeable layer, desired surface asperities with gradual convex portions achieving both of having anti-glare properties and preventing white blur from occurring can be easily formed. When the translucent base has poor adhesion with the anti-glare layer, it is preferred that the permeable layer is formed so as to be thick in order to improve the adhesion.

In the case where triacetylcellulose (TAC) is employed as a translucent base, and a permeable layer is formed, a good solvent to TAC can be suitably used, for example. Examples of the solvent include ethyl acetate, methyl ethyl ketone, and cyclopentanone.

<Anti-glare layer>

An anti-glare layer is formed by curing the coating layer. It is preferred that the coating layer is dried prior to the curing. The drying may be, for example, natural drying, air drying by blowing air, heat drying, or a combination thereof.

The way of curing the coating layer is not particularly limited and is preferably ultraviolet curing. The amount of irradiation with the energy radiation source is preferably from 50 to 500 mJ/cm$^2$ in terms of accumulative exposure at the ultraviolet wavelength of 365 nm. With the amount of irradiation of at least 50 mJ/cm$^2$, the coating layer is cured more sufficiently, and the resultant anti-glare layer has a more sufficient hardness. Moreover, with the amount of irradiation of 500 mJ/cm$^2$ or less, the resultant anti-glare layer can be prevented from being colored.

The thickness (d) of the anti-glare layer is not particularly limited and is preferably in the range from 3 to 12 $\mu$m. The anti-glare film can be prevented from warping by setting the thickness (d) of the anti-glare layer in the above-described range, resulting in avoidance of a problem of reduction in productivity such as a failure at the time of transportation, for example. Moreover, when the thickness (d) is in the above-described range, the weight-average particle size (D) of the particles is preferably in the range from 2.5 to 10 $\mu$m as mentioned above. With the above-mentioned combination of the thickness (d) of the anti-glare layer and the weight-average particle size (D) of the particles, the anti-glare film can have further superior anti-glare properties. The thickness (d) of the anti-glare layer is more preferably from 3 to 8 $\mu$m.

The relationship between the thickness (d) of the anti-glare layer and the weight-average particle size (D) of the particles preferably is $0.3 \leq D/d \leq 0.9$. With such relationship, the anti-glare film can have further superior anti-glare properties, can prevent white blur from occurring, and can have no defect in outward appearance.

In the anti-glare film according to the present invention, the height of each convex portion from the roughness mean line of the anti-glare layer is preferably less than 0.4 times, more preferably in the range of 0.01 or more to less than 0.4 times, yet more preferably 0.01 or more to less than 0.3 times, the thickness of the anti-glare layer. With the height of each convex portion in the above-described range, formation of a projection as a defect in outward appearance in each convex portion can be suitably prevented. When the anti-glare film according to the present invention includes convex portions with such height, a defect in outward appearance can be less prone to occur. The height from the mean line is described with reference to FIG. 6. FIG. 6 is a schematic view of a two-dimensional profile of a cross section of the anti-glare layer, where the straight line L indicates a roughness mean line (center line) in the two-dimensional profile. The height H from the roughness mean line to the top (of the convex portion) in the two-dimensional profile is the height of the convex portion in the present invention. In FIG. 6, a part of the convex portion, crossing the mean line is indicated by oblique hatching. The thickness of the anti-glare layer is calculated by measuring the overall thickness of the anti-glare film and subtracting the thickness of the translucent base from the overall thickness. The overall thickness and the thickness of the translucent base can be measured using a microgauge-type thickness gauge, for example.

It is preferred that in the anti-glare layer of the anti-glare film according to the present invention, the number of defects in outward appearance having the maximum diameter of 200 $\mu$m or more is 1 or less per 1 m$^2$ of the anti-glare layer. It is more preferred that the anti-glare film according to the present invention does not have any defect in outward appearance.

The haze value of the anti-glare film according to the present invention is preferably in the range from 0% to 10%. The haze value is a haze value (cloudiness) of the entire anti-glare film according to JIS K 7136 (2000 version). The haze value is more preferably from 0% to 5%, yet more preferably from 0% to 3%. In order to make the haze value be in the above-described range, it is preferred that the particles and the resin are selected so that the difference in refractive index between the particles and the resin is in the range from 0.001 to 0.02. When the haze value is in the above-described range, a sharp image can be obtained, and a contrast in dark place can be improved.

The arithmetic average surface roughness Ra defined in JIS B 0601 (1994 version) of the surface asperities of the anti-glare layer of the anti-glare film according to the present invention is preferably in the range from 0.03 to 0.45 $\mu$m, more preferably from 0.04 to 0.40 $\mu$m. In order to prevent reflected glare of external light and an image from occurring on the surface of the anti-glare film, the surface preferably has roughness to some extent. When Ra is 0.03 $\mu$m or more, the reflected glare can be ameliorated. When Ra is in the above-described range, scattering of reflected light when viewed from oblique directions is suppressed, white blur can be ameliorated, and a contrast in bright place can be improved in the case of using the anti-glare layer in an image display or the like.

The average convex-to-convex distance Sm (mm) of the surface asperities, measured according to JIS B 0601 (1994 version) is preferably in the range from 0.05 to 0.4, more preferably from 0.08 to 0.3. When Sm is in the above-described range, the anti-glare film can have further superior anti-glare properties and can prevent white blur from occurring, for example.

The average tilt angle θa (°) of the surface asperities of the anti-glare layer of the anti-glare film according to the present invention is preferably in the range from 0.1 to 1.5, more preferably from 0.2 to 1.0. The average tilt angle θa is a value defined by the following mathematical equation (1). The average tilt angle θa is a value measured by the method described below in the section of Examples.

$$\text{Average tilt angle } \theta a = \tan^{-1}\Delta a \qquad (1)$$

In the mathematical equation (1), as shown in the following mathematical equation (2), $\Delta a$ denotes a value obtained by dividing the sum (h1 + h2 + h3 · · · + hn) of the differences (heights h) between adjacent peaks and the lowest point of the trough formed therebetween by the standard length L of the roughness curve defined in JIS B 0601 (1994 version). The roughness curve is a curve obtained by removing the surface waviness components with longer wavelengths than the predetermined one from the profile curve using a retardation compensation high-pass filter. The profile curve denotes a profile that appears at the cut surface when an object surface was cut in a plane perpendicular to the object surface.

$$\Delta a = (h1 + h2 + h3 \cdots + hn)\,/L \qquad (2)$$

When all of Ra, Sm, and θa are in the above described ranges, the anti-glare film can have further superior anti-glare properties and can prevent white blur from occurring.

It is preferred that the anti-glare film has the hardness of 2H or more in terms of pencil hardness although it is influenced by the thickness of the layer.

The anti-glare film according to the present invention can be, for example, the one obtained by forming an anti-glare layer on one surface of a transparent plastic film base. The anti-glare layer contains particles, and thus, the anti-glare layer has surface asperities. In this example, the anti-glare layer is formed on one surface of the transparent plastic film base, and the present invention, however, is not limited by this. The anti-glare film may be the one obtained by forming anti-glare layers on both surfaces of the transparent plastic film base. In this example, the anti-glare layer is a monolayer, and the present invention, however, is not limited by this. The anti-glare layer may have a multilayer structure obtained by laminating two or more layers.

<Antireflection layer>

In the anti-glare film according to the present invention, an antireflection layer (low refractive index layer) may be placed on the anti-glare layer. For example, in the case where the anti-glare film is attached to an image display, a light reflection at the interface between air and the anti-glare layer is one of the factors of reducing visibility of images. The antireflection layer reduces the surface reflection. The anti-glare layer and the antireflection layer may be formed on each of both surfaces of the transparent plastic film base. Furthermore, each of the anti-glare layer and the antireflection layer may have a multilayer structure obtained by laminating two or more layers.

In the present invention, the antireflection layer is a thin optical film whose thickness and refractive index are controlled strictly or the one including two or more of the thin optical films laminated together. The antireflection layer uses the interference effect of light to cancel opposite phases of incident light and reflected light and thereby exhibits an antireflection function. The wavelength range of visible light that allows the antireflection function to be exhibited is, for example, from 380 to 780 nm, the wavelength range in which particularly high visibility is obtained is in the range of 450 to 650 nm, and preferably, the antireflection layer is designed so that the reflectance at 550 nm, which is the center wavelength, is minimized.

When the antireflection layer is designed based on the interference effect of light, the interference effect can be enhanced by, for example, a method of increasing the difference in refractive index between the antireflection layer and the anti-glare layer. Generally, in an antireflection multilayer having a structure including two to five thin optical layers (each with strictly controlled thickness and refractive index) that are laminated together, components with different refractive indices from each other are used to form a plurality of layers with a predetermined thickness. Thus, the antireflection layer can be designed at a higher degree of freedom, the antireflection effect can be improved, and the spectral reflection characteristics also can be made uniform (flat) in the visible light range. Since each layer of the thin optical film must be highly precise in thickness, a dry process such as vacuum deposition, sputtering, or CVD is generally used to form each layer.

Further, it is preferred that a contamination preventive film formed of a silane compound having a fluorine group, an organic compound having a fluorine group, or the like is laminated on the antireflection layer in order to prevent adhesion of contaminant and improve removability of adherent contaminant.

It is preferred that at least one of the translucent base and the anti-glare layer in the anti-glare film according to the present invention is subjected to a surface treatment. When the transparent plastic film base is subjected to a surface treatment, adhesion to the anti-glare layer, or a polarizer or a polarizing plate can be further improved. When the anti-glare layer is subjected to a surface treatment, adhesion to the antireflection layer, or a polarizer or a polarizing plate can be further improved.

In an anti-glare film in which the anti-glare layer is formed on one surface of the translucent base, the other surface of the translucent base may be subjected to a solvent treatment in order to prevent the film from warping. Alternatively, in an anti-glare film in which the anti-glare layer is formed on one surface of the translucent base such as the transparent plastic film base, a transparent resin layer may be  formed on the other surface of the translucent base in order to prevent the film from warping.

<Optical element>

Generally, the translucent base side of the anti-glare film obtained in the present invention can be attached to an optical element used in LCD via a pressure-sensitive adhesive or an adhesive. In order to perform the attachment, the translucent base may be subjected to any of the above-mentioned surface treatments.

The optical element can be, for example, a polarizer or a polarizing plate, for example. The polarizing plate is generally configured so that a transparent protective film is laminated on one or both surfaces of the polarizer. When a transparent protective film is provided on both surfaces of the polarizer, the front and back transparent protective films may be formed of the same material or different materials. Polarizing plates are generally placed on both sides of a liquid crystal cell and is placed so that the absorption axes of two polarizing plates are substantially orthogonal to each other.

Next, an optical element including the anti-glare film laminated therein is described using a polarizing plate as an example. By laminating the anti-glare film on a polarizer or a polarizing plate with an adhesive or a pressure-sensitive adhesive, a polarizing plate having superior display characteristics of achieving both of having anti-glare properties and preventing white blur from occurring and preventing a defect in outward appearance from occurring can be obtained.

The polarizer is not particularly limited and various kinds can be used. Examples of the polarizer include: a film that is uniaxially stretched after a hydrophilic polymer film, such as a polyvinyl alcohol type film, a partially formalized polyvinyl alcohol type film, or an ethylene-vinyl acetate copolymer type partially saponified film, is allowed to adsorb dichromatic substances such as iodine or a dichromatic dye; and a polyene type oriented film, such as a dehydrated polyvinyl alcohol film or a dehydrochlorinated polyvinyl chloride film.

Preferably, the transparent protective film formed on one or both surfaces of the polarizer is superior in, for example, transparency, mechanical strength, thermal stability, moisture-blocking properties, and retardation value stability. Examples of the material for forming the transparent protective film include the same materials as those used for the aforementioned transparent plastic film substrate.

Moreover, the polymer films described in JP 2001-343529 A (WO 01/37007) also can be used as the transparent protective film. The polymer film can be produced by extruding the resin composition in the form of a film. The polymer film has a small retardation and a small photoelastic coefficient and thus can eliminate defects such as unevenness due to distortion when it is used for a protective film of, for example, a polarizing plate. The polymer film also has low moisture permeability and thus has high durability against moisture.

From the viewpoints of polarizing characteristics and durability, the transparent protective film is preferably a film made of cellulose resin such as triacetyl cellulose or a film made of norbornene resin. Examples of commercially available products of the transparent protective film include FUJITAC (trade name) (produced by Fujifilm Corporation), ZEONOA (trade name) (produced by Nippon Zeon Co., Ltd.), and ARTON (trade name) (produced by JSR Corporation). The thickness of the transparent protective film is not particularly limited. It can be, for example, in the range of 1 to 500 $\mu$m from the viewpoints of strength, workability such as handling properties, and thin layer properties.

The configuration of the polarizing plate on which the anti-glare film has been laminated is not particularly limited and may be, for example, a configuration obtained by laminating a transparent protective film, the polarizer, and the transparent protective film on the anti-glare film in this order or a configuration obtained by laminating the polarizer and the transparent protective film on the anti-glare film in this order.

<Image display>

The configuration of the image display according to the present invention is the same as that of the conventional image display except that the anti-glare film according to the present invention is used. For example, in the case of a LCD, the image display can be produced by incorporating a driving circuit through appropriately assembling components such as a liquid crystal cell, an optical element such as a polarizing plate, and if necessary, a lighting system (backlight or the like).

The image display according to the present invention may be used for any suitable applications. Examples of the applications include office automation equipment such as a PC monitor, a notebook PC, and a copy machine, portable devices such as a mobile phone, a watch, a digital camera, a personal digital assistant (PDA), and a handheld game machine, home electric appliances such as a video camera, a television set, and a microwave oven, vehicle equipment such as a back monitor, a monitor for a car-navigation system, and a car audio device, display equipment such as an information monitor for stores, security equipment such as a surveillance monitor, and nursing and medical equipment such as a monitor for nursing care and a monitor for medical use.

Examples

Next, the examples of the present invention are described together with the comparative examples. The present invention, however, is not limited by the examples and the comparative examples. Various characteristics in the examples and the comparative examples were evaluated or measured by the following methods.

(Specific gravity k (kg/m$^3$) of coating layer)

100 ml of a coating solution was provided, and the weight thereof was measured and was used as a specific gravity of a coating layer.

(Acceleration a (m/s$^2$))

The acceleration was calculated according to the following equation using a tilt angle of $\theta$,

$$a = \text{gravity acceleration } (9.8 \text{ m/s}^2) \times \sin\theta.$$

(Thickness h (m) of coating layer)

An non-contact interference thickness measurement was performed using "MCPD3750" produced by Otsuka Electronics Co., Ltd. The refractive index of the coating layer was 1.5.

(Viscosity η (Pa • s) of coating layer)

A viscosity at the shear rate of 200 (1/s) was measured using RHEOSTRESS RS6000 produced by HAAKE.

(Measurement of surface profile)

A glass sheet (with a thickness of 1.3 mm) produced by Matsunami Glass Ind., Ltd. was attached to a surface of an anti-glare film on which no anti-glare layer had been formed, with a pressure-sensitive adhesive. Subsequently, the surface profile of the anti-glare layer was measured under the condition where a cutoff value was 0.8 mm using a high-precision microfigure measuring instrument (SURFCORDER ET4000 (trade name), produced by Kosaka Laboratory Ltd.), and the arithmetic average surface roughness Ra, the average convex-to-convex distance Sm, and the average tilt angle θa were then determined. The high-precision microfigure measuring instrument automatically calculated the arithmetic average surface roughness Ra and the average tilt angle θa. The arithmetic average surface roughness Ra and the average tilt angle θa were based on JIS B 0601 (1994 version). The average convex-to-convex distance Sm was an average convex-to-convex distance (mm) on the surface, measured according to JIS B 0601 (1994 version).

(Outward appearance evaluation)

1 m$^2$ of an anti-glare film was provided, which was then observed in a dark room from a distance of 30 cm by visual check using a fluorescent lamp (1000 Lx) in order to check a defect in outward appearance. The observed defect in outward appearance was observed using a graduated loupe in order to measure the size (the maximum diameter) of the defect in outward appearance and count the number of the defects with the size of 200 μm or more.

(Anti-glare property evaluation)

(1) A black acrylic plate (with a thickness of 2.0 mm, produced by Mitsubishi Rayon Co., Ltd.) was attached to a surface of the anti-glare film on which no anti-glare layer had been formed, with a pressure-sensitive adhesive. Thus, a sample having a back surface with no reflection was produced.
(2) In an office environment (about 1000 Lx) where displays are used in general, the sample was illuminated by a fluorescent lamp (three wavelength light source), and anti-glare properties of the sample produced above were evaluated by visual check according to the following criteria:

Evaluation criteria:

G: anti-glare properties are superior, and no reflected glare of an image of the outline of the fluorescent lamp remains
NG: anti-glare properties are inferior, and reflected glare of an image of the outline of the fluorescent lamp remains.

(White blur evaluation)

(1) A black acrylic plate (with a thickness of 1.0 mm, produced by Nitto Jushi Kogyo Kabushiki Kaisha) was attached to the surface of an anti-glare film on which no anti-glare layer had been formed, with a pressure-sensitive adhesive. Thus, a sample having a back surface with no reflection was produced.
(2) In an office environment (about 1000 Lx) where displays are used in general, the white blur phenomenon was observed by visual check by viewing the display from the direction that forms an angle of 60° with the reference (0°) that is the direction perpendicular to the plane of the sample thus produced. Then evaluation was made according to the following criteria:

Evaluation Criteria:

AA: white blur is hardly observed
A: white blur is observed but has a small effect on visibility
B: strong white blur is observed and deteriorates the visibility considerably.

(Weight-average particle size of fine particles)

By the Coulter counting method, the weight average particle size of the fine particles was measured. Specifically, a particle size distribution measurement apparatus (COULTER MULTISIZER (trade name), produced by Beckman Coulter, Inc.) using a pore electrical resistance method was employed to measure an electrical resistance of an electrolyte corresponding to the volume of the fine particles when the fine particles passed through the pores. Thus, the number and volume of fine particles were measured and then the weight average particle size was calculated.

(Thickness of anti-glare layer)

The overall thickness of an anti-glare film was measured using a microgauge type thickness gauge produced by Mitutoyo Corporation, and the thickness of an anti-glare layer was calculated by subtracting the thickness of a translucent base from the overall thickness.

(Example 1)

As a resin contained in a coating solution, 100 parts by weight of an ultraviolet-curable urethane acrylate resin (produced by Nippon Synthetic Chemical Industry Co., Ltd., "UV1700B" (trade name), with a solid content of 100%) was provided. 2 parts by weight of particles of a copolymer of acryl and styrene (produced by Sekisui Plastics Co., Ltd., "TECHPOLYMER" (trade name), with a weight-average particle size: 3.0 $\mu$m and a refractive index: 1.52) as particles, 0.4 parts by weight of synthesized smectite which is organoclay (produced by CO-OP Chemical Co. Ltd., "LUCENTITE SAN" (trade name)) as thixotropy-imparting agents, 3 parts by weight of a photoinitiator (produced by BASF, "IRGACURE 907" (trade name)), and 0.5 parts by weight of a leveling agent (produced by DIC Corporation, "PC4100" (trade name), with a solid content of 10%) were mixed relative to 100 parts by weight of the solid content of the resin. The organoclay was used after diluting it with toluene so as to have a solid content of 6.0%. This mixture thus obtained was diluted with a toluene/cyclopentanone (CPN) mixed solvent (with a weight ratio of 80/20) so as to have a solid concentration of 35 wt%, which was then subjected to ultrasonic dispersion using an ultrasonic disperser. Thus, a coating solution was prepared.
As a translucent base, a transparent plastic film base (a triacetylcellulose film, produced by Fujifilm Corporation, "FUJITAC" (trade name), with a thickness: 60 $\mu$m and a refractive index: 1.49) was provided. The coating solution was applied to one surface of the transparent plastic film base using a wire bar. Thus, a coating layer was formed. At that time, the transparent plastic film base was tilted 12° as shown in FIG. 4A, and the shear velocity V of the coating layer was set to $0.20 \times 10^{-9}$ m/s (the shear distance S = $2.0 \times 10^{-9}$ m) for 10 seconds. Then, the coating layer was dried by heating it at 60°C for 60 minutes. Thereafter, the coating layer was subjected to a hardening treatment by irradiating it with ultraviolet at the amount of irradiation with a high-pressure mercury lamp of 300 mJ/cm$^2$. Thus, an anti-glare layer with a thickness of 7 $\mu$m was formed, and an anti-glare film of Example 1 was obtained.

(Example 2)

An anti-glare film of Example 2 was obtained in the same manner as in Example 1 except that the transparent plastic film base was tilted 30°, and the shear velocity V of the coating layer was set to $0.40 \times 10^{-9}$ m/s (the shear distance S = $4.0 \times 10^{-9}$ m) for 10 seconds.

(Example 3)

An anti-glare film of Example 3 was obtained in the same manner as in Example 1 except that the amount of the thixotropy-imparting agents to be added was set to 0.8 parts by weight, the transparent plastic film base was tilted 30°, and the shear velocity V of the coating layer was set to $0.62 \times 10^{-9}$ m/s (the shear distance S = $6.2 \times 10^{-9}$ m) for

10 seconds.

(Example 4)

An anti-glare film of Example 4 was obtained in the same manner as in Example 1 except that the amount of the thixotropy-imparting agents to be added was set to 1.2 parts by weight, the transparent plastic film base was tilted 30°, and the shear velocity V of the coating layer was set to $0.28 \times 10^{-9}$ m/s (the shear distance S = $2.8 \times 10^{-9}$ m) for 10 seconds.

(Example 5)

An anti-glare film of Example 5 was obtained in the same manner as in Example 1 except that an ultraviolet-curable polyfunctional acrylate resin (produced by Shin-Nakamura Chemical Co., Ltd, "A-DPH" (trade name), a solid content of 100%) was used as the resin contained in the coating solution.

(Example 6)

An anti-glare film of Example 6 was obtained in the same manner as in Example 1 except that an ultraviolet-curable urethane acrylate resin (produced by Toagosei Co. Ltd., "M1960" (trade name), a solid content of 100%) was used as the resin contained in the coating solution, the transparent plastic film base was tilted 12°, and the shear velocity V of the coating layer was set to $0.26 \times 10^{-9}$ m/s (the shear distance S = $2.6 \times 10^{-9}$ m) for 10 seconds.

(Comparative Example 1)

An anti-glare film of Comparative Example 1 was obtained in the same manner as in Example 1 except that the transparent plastic film base was not tilted (0°), and the shear velocity V of the coating layer was set to 0 m/s (the shear distance S = $0 \times 10^{-9}$ m) for 10 seconds.

(Comparative Example 2)

An anti-glare film of Comparative Example 2 was obtained in the same manner as in Example 1 except that the thixotropy-imparting agents were not added, the transparent plastic film base was tilted 30°, and the shear velocity V of the coating layer was set to $0.35 \times 10^{-9}$ m/s (the shear distance S = $3.5 \times 10^{-9}$ m) for 10 seconds.

(Comparative Example 3)

An anti-glare film of Comparative Example 3 was obtained in the same manner as in Example 1 except that an ultraviolet-curable urethane acrylate resin (produced by DIC Corporation, "UNIDIC 17-806" (trade name), a solid content of 80%) was used as the resin contained in the coating solution, the transparent plastic film base was not tilted (0°), and the shear velocity V of the coating layer was set to 0 m/s (the shear distance S = $0 \times 10^{-9}$ m) for 10 seconds.

(Comparative Example 4)

An anti-glare film of Comparative Example 4 was obtained in the same manner as in Example 1 except that an ultraviolet-curable urethane acrylate resin (produced by DIC Corporation, "UNIDIC 17-806" (trade name), a solid content of 80%) was used as the resin contained in the coating solution, the amount of the thixotropy-imparting agents to be added was set to 0.8 parts by weight, the transparent plastic film base was tilted 12°, and the shear velocity V of the coating layer was set to $0.19 \times 10^{-9}$ m/s (the shear distance S = $1.9 \times 10^{-9}$ m) for 10 seconds.

(Comparative Example 5)

An anti-glare film of Comparative Example 5 was obtained in the same manner as in Example 1 except that an ultraviolet-curable urethane acrylate resin (produced by DIC Corporation, "UNIDIC 17-806" (trade name), a solid content of 80%) was used as the resin contained in the coating solution, the amount of the thixotropy-imparting agents to be added was set to 1.6 parts by weight, the transparent plastic film base was tilted 30°, and the shear velocity V of the coating layer was set to $0.32 \times 10^{-9}$ m/s for 10 seconds.

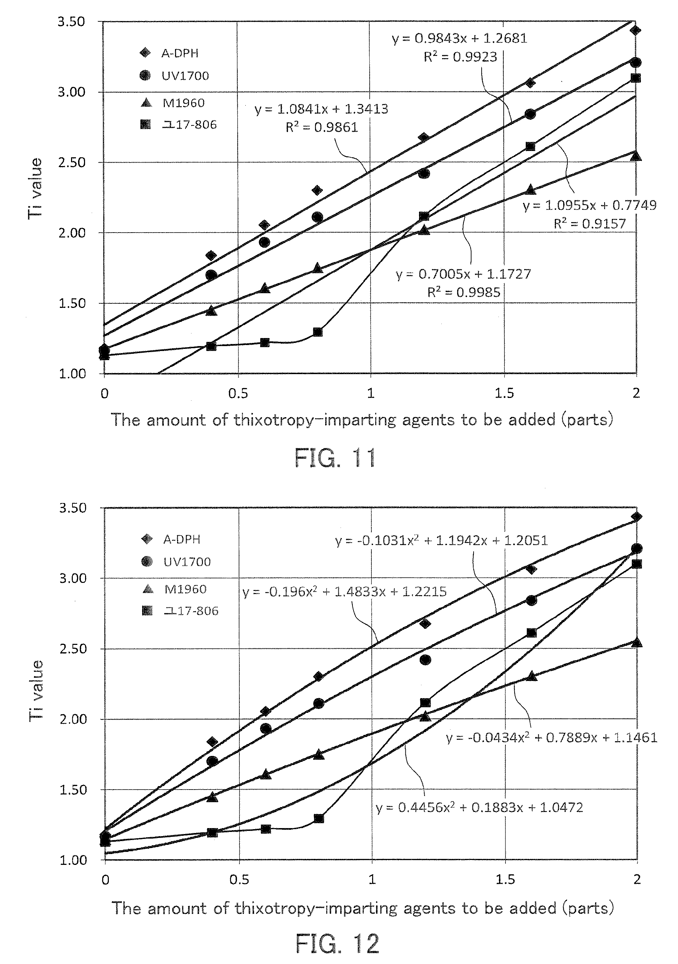

Various characteristics of the anti-glare films of the examples and the comparative examples obtained as described above were measured or evaluated. The results of these are shown in Table 1 below. Moreover, FIGs. 11 and 12 show graphs each showing the relationships between the amount of thixotropy-imparting agents to be added and the Ti value with respect to resins used in the examples and the comparative examples. FIG. 11 includes linear approximate equations of the amount of thixotropy-imparting agents to be added and the Ti value. FIG. 12 includes quadratic polynomial approximate equations of the amount of thixotropy-imparting agents to be added and the Ti value.

[Table 1]

| | Composition | | Ti value | Contribution ratio R² | Quadratic coefficient a | Coating condition | | | | | | | | Surface roughness | | | Anti-glare property | White blur | Haze (°) |
|---|---|---|---|---|---|---|---|---|---|---|---|---|---|---|---|---|---|---|---|
| | Resin | Thixotropic agent (pts.wt.) | | | | k (kg/m³) | a (m/s²) | h (×10⁻⁶ m) | η (×10⁻³ Pa·s) | V (×10⁻⁹ m/s) | t (s) | S (×10⁻⁹ m) | Tilt angle | Ra (µm) | Sm (mm) | θa (°) | | | |
| Ex. 1 | UV1700 | 0.4 | 1.7 | 0.9923 | −0.1031 | 0.975 | 2.0 | 20 | 4.0 | 0.20 | 10 | 2.0 | 12° | 0.213 | 0.325 | 0.413 | G | AA | 2.5 |
| Ex. 2 | UV1700 | 0.4 | 1.7 | 0.9923 | −0.1031 | 0.975 | 4.9 | 20 | 4.8 | 0.40 | 10 | 4.0 | 30° | 0.347 | 0.375 | 0.510 | G | A | 2.6 |
| Ex. 3 | UV1700 | 0.8 | 2.1 | 0.9923 | −0.1031 | 0.975 | 4.9 | 20 | 3.1 | 0.62 | 10 | 6.2 | 30° | 0.144 | 0.204 | 0.440 | G | AA | 2.5 |
| Ex. 4 | UV1700 | 1.2 | 2.4 | 0.9923 | −0.1031 | 0.975 | 4.9 | 20 | 6.9 | 0.28 | 10 | 2.8 | 30° | 0.095 | 0.158 | 0.380 | G | AA | 2.4 |
| Ex. 5 | A-DPH | 0.4 | 1.8 | 0.9861 | −0.196 | 0.975 | 2.0 | 20 | 4.0 | 0.20 | 10 | 2.0 | 12° | 0.329 | 0.339 | 0.520 | G | A | 2.9 |
| Ex. 6 | M1960 | 0.4 | 1.5 | 0.9985 | −0.0434 | 0.975 | 2.0 | 20 | 3.0 | 0.26 | 10 | 2.6 | 12° | 0.128 | 0.219 | 0.360 | G | AA | 2.4 |
| Comp. Ex. 1 | UV1700 | 0.4 | 1.7 | 0.9923 | −0.1031 | 0.975 | 0.0 | 20 | 4.0 | 0.00 | 10 | 0.0 | 0° | 0.038 | 0.177 | 0.260 | NG | B | 2.4 |
| Comp. Ex. 2 | UV1700 | 0 | 1.2 | 0.9923 | −0.1031 | 0.975 | 4.9 | 20 | 5.5 | 0.35 | 10 | 3.5 | 30° | 0.011 | 0.085 | 0.110 | NG | B | 2.5 |
| Comp. Ex. 3 | 17-806 | 0.4 | 1.2 | 0.9157 | 0.4456 | 0.975 | 0.0 | 20 | 3.1 | 0.00 | 10 | 0.0 | 0° | 0.014 | 0.069 | 0.140 | NG | B | 2.9 |
| Comp. Ex. 4 | 17-806 | 0.8 | 1.3 | 0.9157 | 0.4456 | 0.975 | 2.0 | 20 | 4.1 | 0.19 | 10 | 1.9 | 12° | 0.031 | 0.122 | 0.210 | NG | B | 3.1 |
| Comp. Ex. 5 | 17-806 | 1.6 | 2.6 | 0.9157 | 0.4456 | 0.975 | 4.9 | 20 | 5.9 | 0.32 | 10 | 3.2 | 30° | 0.029 | 0.097 | 0.240 | NG | B | 3.1 |

Condition (I): $R^2 \geq 0.95$

Condition (II): $a > 0$

EP 2 696 222 A2

23

As shown in Table 1, results of anti-glare properties and white blur were both favorable in the examples. In contrast, in Comparative Example 1 in which the shear velocity V of the coating layer was 0 m/s, and the coating layer was not sheared and Comparative Example 2 including no thixotropy-imparting agent, the above-described all of the characteristics were unfavorable. In Comparative Examples 3 to 5 using "UNIDIC 17-806" as the resin, the above-described all of the characteristics were unfavorable. In Comparative Examples 3 to 5, composition of the coating solution was the same except the amount of the thixotropy-imparting agents (thixotropic agents) to be added. In Comparative Examples 3 to 5, the contribution ratio $R^2$ in the linear approximate equation of the amount of the thixotropy-imparting agents to be added and the Ti value was less than 0.95, i.e., the coating solution did not satisfy the condition (I), and the quadratic coefficient a in the quadratic polynomial approximate equation, $y = ax^2 + bx + c$, of the amount x of the thixotropy-imparting agents to be added and the Ti value y was a positive value, i.e., the coating solution did not satisfy the condition (II). In Comparative Example 2 containing no thixotropy-imparting agent, a defect in outward appearance was found in the outward appearance evaluation.

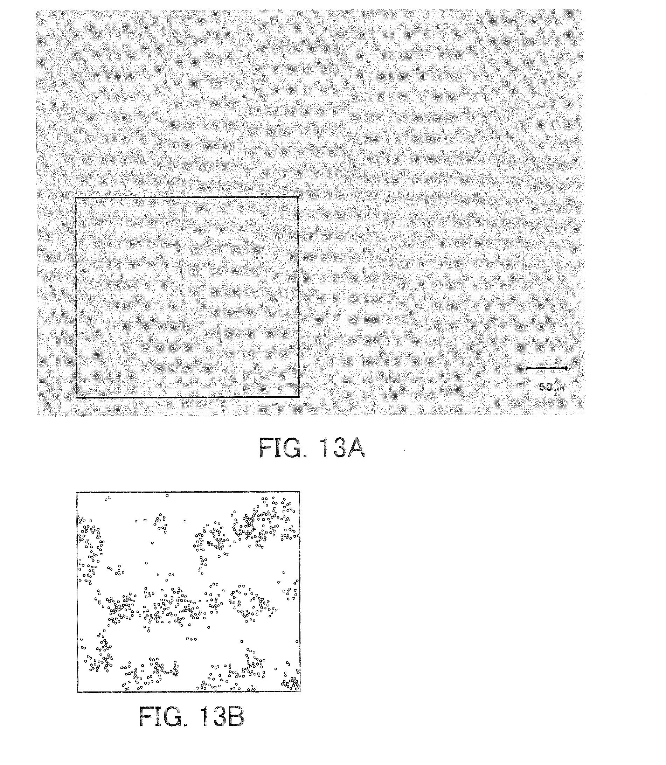

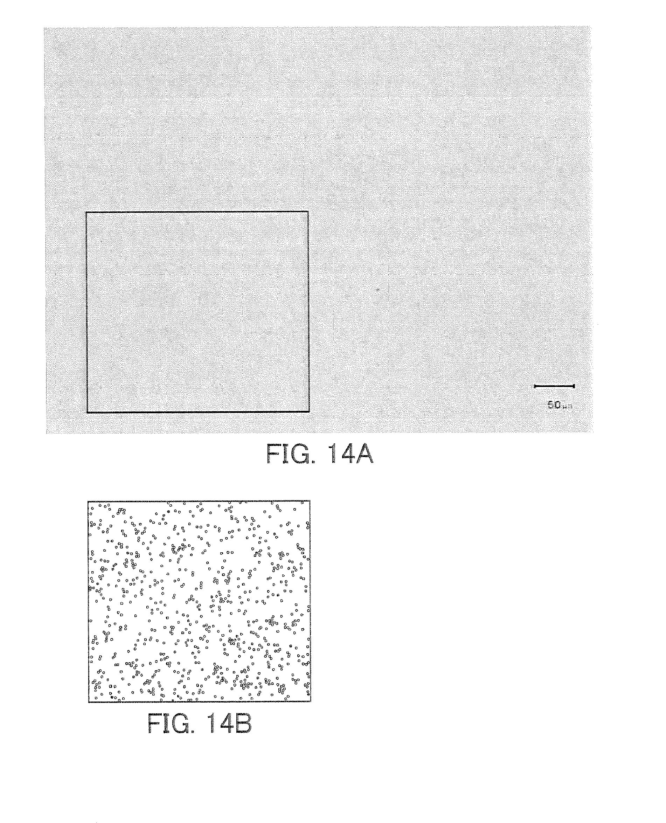

FIG. 13A is a photograph obtained by observing the surface of an anti-glare layer in an anti-glare film of Example 1 with an optical microscope (semi-transmissive mode). FIG. 14A is a photograph obtained by observing the surface of an anti-glare layer in an anti-glare film of Comparative Example 4 with an optical microscope (semi-transmissive mode). FIG. 13B is a schematic view showing a distribution of particles observed in the photograph of FIG. 13A. FIG. 14B is a schematic view showing a distribution of particles observed in the photograph of FIG. 14A. It can be seen that particles are flocculated (unevenly distributed) by flocculation action of thixotropy-imparting agents in the anti-glare film of Example 1. In contrast, it can be seen that particles are not flocculated (not unevenly distributed) by flocculation action of thixotropy-imparting agents in the anti-glare film of Comparative Example 4.

The anti-glare film obtained by the method for producing an anti-glare film according to the present invention can be suitably used in optical elements such as polarizing plates, liquid crystal panels, and image displays such as LCDs (liquid crystal displays) and OLEDs (organic EL displays). The use of the anti-glare film is not limited, and the anti-glare film is applicable in a wild range of fields.

REFERENCE CHARACTERS LIST

| | |
|---|---|
| 1 to 6, 12 | particle |
| 10 | chain double-dashed line |
| 11 | anti-glare layer |
| 13 | thixotropy-imparting agent |
| 14 | convex portion |
| 20 | translucent base |
| 21 | coating layer |
| 22 | coating solution |

**Claims**

1. A method for producing an anti-glare film, comprising the steps of:

coating a coating solution on at least one surface of a translucent base (20) to form a coating layer (21); and
curing the coating solution to form an anti-glare layer (11), wherein
the coating solution comprises a resin, particles (12), thixotropy-imparting agents (13), and a solvent and satisfies at least one of the following conditions (I) and (II), and
the method further comprises the step of:
shearing the coating solution coated on the translucent base (20),

(I) a contribution ratio $R^2$ is 0.95 or more in a linear approximate equation of the amount of the thixotropy-imparting agents to be added and the Ti value which is defined by the following equation (A) and in the range from 1.2 to 3.5,
(II) a quadratic coefficient a is a negative value in a quadratic polynomial approximate equation, $y = ax^2 + bx + c$ of the amount x of the thixotropy-imparting agents to be added and the Ti value y which is defined by the following equation (A) and in the range from 1.2 to 3.5,

$$Ti\ value = \beta 1/\beta 2 \qquad (A)$$

where in the equation (A),

$\beta 1$: viscosity at shear rate of 20 (1/s)
$\beta 2$: viscosity at shear rate of 200 (1/s).

2. A method for producing an anti-glare film, comprising the steps of
coating a coating solution on at least one surface of a translucent base to form a coating layer; and
curing the coating solution to form an anti-glare layer, wherein
the coating solution comprises a resin, particles, thixotropy-imparting agents and a solvent, and
the method further comprises the step of
shearing the coating solution coated on the translucent base, and
the particles are unevenly distributed by the shearing, thereby forming a surface profile of the anti-glare layer.

3. The method according to claim 2, wherein
the surface of the anti-glare layer has asperities, and
a convex portion of the asperities is formed in a part in which the particles are unevenly distributed.

4. The method according to any one of claims 1 to 3, wherein
in the step of shearing, a shear distance S defined by the following equation (B), of the coated coating solution is in a range from $0.005 \times 10^{-9}$ to $120 \times 10^{-9}$ m,

$$S = \int V dt \qquad (B)$$

where in the equation (B),
S: shear distance (m)
V: shear rate (m/s)
t: shear holding time (s),
the shear velocity V is defined by the following equation (C),

$$V = kah^2/\eta \qquad (C)$$

where in the equation (C),
k: specific gravity of coating layer $(kg/m^3)$
a: acceleration $(m/s^2)$
h: thickness of coating layer (m)
$\eta$: viscosity of coating layer (Pa $\cdot$ s)
provided that the acceleration a may change over time or may be constant.

5. The method according to claim 4, wherein
the shear velocity V is set in a range from $0.05 \times 10^{-9}$ to $2.0 \times 10^{-9}$ m/s, preferably from $0.05 \times 10^{-9}$ to $1.0 \times 10^{-9}$ m/s.

6. The method according to any one of claims 4 or 5, wherein
the shear holding time t is set in a range from 0.1 to 60 s.

7. The method according to any one of claims 1 to 6, wherein
the thixotropy-imparting agents (13) are at least one selected from the group consisting of organoclay, oxidized polyolefin, and denatured urea.

8. The method according to any one of claims 1 to 7, wherein

the antiglare layer (11) has a thickness (d) in a range from 3 to 12 μm, and
the particles (12) have a particle size (D) in a range from 2.5 to 10 μm, and wherein the thickness (d) and the particle size (D) preferably satisfy a relationship of  $0.3 \leq D/d \leq 0.9$.

9.  The method according to any one of claims 1 to 8, wherein
the coating solution comprises the particles (12) in a range from 0.2 to 12 parts by weight and the thixotropy-imparting agents (13) in a range from 0.2 to 5 parts by weight relative to 100 parts by weight of the resin.

10. An anti-glare film obtainable by the method according to any one of claims 1 to 9.

11. The anti-glare film according to claim 10, wherein
the following arithmetic average surface roughness Ra of the anti-glare layer is in a range from 0.03 to 0.45 μm,
Ra: arithmetic average surface roughness (μm) defined in JIS B 0601 (1994 version).

12. A coating solution for forming an anti-glare layer (11) in an anti-glare film including a translucent base (20) and the anti-glare layer (11) laminated on at least one surface of the translucent base, the coating solution comprising:

a resin;
particles (12);
thixotropy-imparting agents (13); and
a solvent and satisfying at least one of the following conditions (I) and (II),

(I) a contribution ratio $R^2$ is 0.95 or more in a linear approximate equation of the amount of the thixotropy-imparting agents to be added and the Ti value which is defined by the following equation (A) and in the range from 1.2 to 3.5,
(II) a quadratic coefficient a is a negative value in a quadratic polynomial approximate equation, $y = ax^2 + bx + c$ of the amount x of the thixotropy-imparting agents to be added and the Ti value y which is defined by the following equation (A) and in the range from 1.2 to 3.5,

$$\text{Ti value} = \beta1/\beta2 \qquad (A)$$

where in the equation (A),

β1: viscosity at shear rate of 20 (1/s)
β2: viscosity at shear rate of 200 (1/s).

13. The coating solution according to claim 12, wherein
thixotropy-imparting agents (13) are at least one selected from the group consisting of organoclay, oxidized polyolefin, and denatured urea.

14. The coating solution according to claim 12 or 13, comprising the particles in a range from 0.2 to 12 parts by weight and the thixotropy-imparting agents in a range from 0.2 to 5 parts by weight relative to 100 parts by weight of the resin.

15. A polarizing plate comprising: a polarizer and the anti-glare film according to claim 10 or 11.

16. An image display comprising the anti-glare film according to claim 10 or 11, or the polarizing plate according to claim 15.

FIG. 1A

FIG. 1B

The amount of thixotropy-imparting agents to be added

Examples

(a)

Comparative Examples

(b)

(c)

Thixotropy-imparting agent distribution state (assumption)

FIG. 2

A(m²)

Velocity V(m/s)

h(m)

Fluid

Fixed plate

FIG. 3

FIG. 4A

FIG. 4B

$$S = S_1 + S_2 + S_3$$

FIG. 5

FIG. 6

FIG. 7A

FIG. 7B

(a)

(b)

Coating layer

Translucent base

Anti-glare layer

Translucent base

10

FIG. 8A

(a)

(b)

Coating layer

1
4
5
6

2 3

10

Translucent base

Anti-glare layer

1
4
5
6

2 3

Translucent base

FIG. 8B

FIG. 9A

12

FIG. 9B

(a)

1 2 3 4 5 6

Coating layer

Translucent base

(b)

1 2 3 4 5 6

Anti-glare layer

Permeable layer

Translucent base

FIG. 10A

EP 2 696 222 A2

(a)

(b)

FIG. 10B

FIG. 11

FIG. 12

FIG. 13A

FIG. 13B

FIG. 14A

FIG. 14B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008257255 A
- JP 4641846 B
- JP 2008088309 A

- JP 2008090263 A
- JP 2001343529 A
- WO 0137007 A